**Europäisches Patentamt**

**European Patent Office**

**Office européen des brevets**

(11) Veröffentlichungsnummer: **0 308 742 B1**

(12) **EUROPÄISCHE PATENTSCHRIFT**

(45) Veröffentlichungstag der Patentschrift: **26.08.92**

(51) Int. Cl.5: **C03C 14/00**, C04B 35/80

(21) Anmeldenummer: **88114737.5**

(22) Anmeldetag: **09.09.88**

(54) **Faserverstärkte Verbundwerkstoffe und Verfahren zu deren Herstellung.**

(30) Priorität: **19.09.87 DE 3731650**

(43) Veröffentlichungstag der Anmeldung:
**29.03.89 Patentblatt 89/13**

(45) Bekanntmachung des Hinweises auf die
Patenterteilung:
**26.08.92 Patentblatt 92/35**

(84) Benannte Vertragsstaaten:
**CH DE ES FR GB IT LI SE**

(56) Entgegenhaltungen:

**CHEMICAL ABSTRACTS, Band 104, Nr. 18, 5. Mai 1986, Seite 347, Nr. 154468m, Columbus, Ohio, US; & JP-A-60 246 254 (DAINIPPON INK AND CHEMICALS, INC) 05-12-1985**

**CERAMIC ENGINEERING AND SCIENCE PROCEEDINGS, Band 5, Nr. 7/8, Juli-August 1984, Seiten 574-582, Columbus, Ohio, US; J.J. LANNUTTI et al.: "Sol-gel derived coatings on SiC and silicate fibers"**

(73) Patentinhaber: **Schott Glaswerke**
**Hattenbergstrasse 10**
**W-6500 Mainz(DE)**

(84) Benannte Vertragsstaaten:

**CH DE ES FR IT LI SE**

(73) Patentinhaber: **Carl-Zeiss-Stiftung trading as**
**SCHOTT GLASWERKE**
**Hattenbergstrasse 10**
**W-6500 Mainz 1(DE)**

(84) Benannte Vertragsstaaten:
**GB**

(72) Erfinder: **Arfsten, Nanning, Dr.**
**Helmerichstrasse 35**
**W-6531 Ockenheim(DE)**
Erfinder: **Kiefer, Werner, Dr.**
**Jupiterweg 19**
**W-6500 Mainz 1(DE)**
Erfinder: **Pannhorst, Wolfgang, Dr.**
**Jakob-Dieterich-Strasse 13**
**W-6500 Mainz(DE)**
Erfinder: **Hegeler, Hartmut**
**Brandenburgische Strasse 75**
**W-1000 Berlin 31(DE)**
Erfinder: **Reich, Christian**
**Haynauer Strasse 4**
**W-1000 Berlin 46(DE)**
Erfinder: **Brückner, Rolf, Prof. Dr.**
**Hagenstrasse 17b**
**W-1000 Berlin 33(DE)**

(74) Vertreter: **Dr. Fuchs, Dr. Luderschmidt Dipl.-Phys. Seids, Dr. Mehler Patentanwälte Abraham-Lincoln-Strasse 7 W-6200 Wiesbaden(DE)**

**Beschreibung**

Die Vorliegende Erfindung betrifft faserverstärkte Verbundwerkstoffe aus Glas und/oder Glaskeramik und anorganischen Fasern sowie ein Verfahren zu deren Herstellung.

Bei der Suche nach Materialien für hochwarmfeste Bauelemente, die insbesondere in der Luft- und Raumfahrt und dem Motoren- und Turbinenbau Anwendung finden, stößt man bei der Weiterentwicklung von Legierungswerkstoffen zunehmend auf Grenzen. Zum einen ist es schwierig, die gewünschte Warmfestigkeit bei Temperaturen oberhalb 800°C zu erreichen, zum anderen werden für diese Werkstoffe Rohstoffe benötigt, die selten und teuer sind, so daß das Kosten/Nutzen-Verhältnis immer ungünstiger wird. Da Legierungen auf der Basis von Fe, Ni und Co außerdem ein großes spezifisches Gewicht haben und oft in bewegten Teilen eingesetzt werden, besteht darüber hinaus generelles Interesse hochwarmfeste Materialien mit geringerem spezifischem Gewicht zu entwickeln.

Als Materialien, die die Legierungswerkstoffe in den erwähnten Anwendungsgebieten substituieren könnten, kommen grundsätzlich keramische Werkstoffe in Betracht, die sich durch geringes spezifisches Gewicht und hervorragende Temperaturbeständigkeit in verschiedensten Atmosphären auszeichnen; hinzu kommen oft hervorragende Verschleißfestigkeit sowie gute chemische Beständigkeit; schließlich stehen die benötigten Rohstoffe in ausreichendem Maße und preiswert zur Verfügung. Daß die keramischen Werkstoffe trotz dieser ausgezeichneten Eigenschaftskombination in den betrachteten Anwendungsgebieten kaum eingesetzt werden, liegt an dem ausgesprochenen Sprödbruchverhalten; die Gefahr, daß ein Bauteil plötzlich katastrophal bricht, wird als zu groß angesehen.

Aufgrund dieser Situation ist man seit ca. 20 Jahren bemüht, die Sprödigkeit der keramischen Werkstoffe durch die Entwicklung von Kompositen zu reduzieren. Eine wichtige Richtung beinhaltet dabei die Entwicklung von faserverstärkten Gläsern und Glaskeramiken. Dabei konnten Steigerungen in der Biegebruchfestigkeit und in der Bruchzähigkeit bis zu Werten um 1000 MPa beziehungsweise 20 MPa x $\sqrt{m}$ (m = Meter) erzielt werden. Die Steigerung der Werte der Bruchzähigkeit, die zur Reduzierung des Sprödbruchverhaltens von besonderer Bedeutung ist, erfolgt bisher hauptsächlich aufgrund experimenteller Erfahrung; sie ist weniger das Resultat gezielter Entwicklung, denn dazu fehlt heute noch das Verständnis darüber, wie der Bruchverlauf in einem Komposit die Werte der Bruchzähigkeit beeinflußt.

Bisher sind in der einschlägigen Literatur zwei grundsätzlich verschiedene Verfahren zur Herstellung von Kompositen mit glasiger beziehungsweise glaskeramischer Matrix bekannt.

Dabei handelt es sich um eine Suspensions-Methode und um die Anwendung der Sol-Gel-Technik.

Im Falle der relativ einfachen, überwiegend benutzten Suspensions-Methode wird ein Matrixpulver mit einem Binder, meist ein Gemisch aus Alkohol(en) und einem Latexbinder, versetzt. Die Fasern werden durch dieses Matrix/Binder-Bad gezogen und dabei mit Matrixmaterial versehen, wie es zuerst 1972 (Sambell et al. (1972), J. Mat. Sci. 7, 676-681) beschrieben wurde.

Im US-Patent 4,256,378 wird die Herstellung eines Spiegels mit besonders guten Eigenschaften aus einem Komposit aus C-Fasern und einem Borosilikatglas beschrieben; mit den besonders guten Eigenschaften sind hier insbesondere die sehr geringe relative Längenänderung und die spezifische Steifigkeit gemeint. Die Herstellung erfolgt über die Herstellung eines Prepregs - darunter wird im allgemeinen eine halbfertige Schicht aus einer Vielzahl mit Matrixmaterial versehenen und nebeneinander, sich in gegenseitigem Kontakt befindenden, abgelagerten Faser verstanden; dabei können auch noch mehrere Faserschichten übereinander abgelagert sein (das Prepreg weist ungefähr 50 bis 70% der Dichte des Endprodukts auf) - durch das Ziehen von C-Fasern durch eine Suspension, bestehend aus Glas in Propanol oder aus Glas in Propanol, Polyvinylalkohol und einem Benetzungsagens, und Verdichtung des Prepregs durch Heißpressen in Vakuum oder Argonschutzgas-Atmosphäre bei 1050 bis 1450°C und Drücken zwischen 6,9 und 13,8 MPa. Ein Ausbrennen eines Binders ist nicht nötig; allerdings leisten die Lösungsmittel keinen Beitrag zu den Eigenschaften des Kompositwerkstoffs. Für ein bidirektional verstärktes Material werden bei Raumtemperatur im Drei-Punkt-Biegeversuch Biegebruchfestigkeiten bis 387 MPa beschrieben. In einer späteren Veröffentlichung, offensichtlich als Resultat einer Verfahrensoptimierung, werden im Drei-Punkt-Biegeversuch Biegebruchfestigkeiten bis 520 MPa für 35 Vol.-% SiC-Fasern und bis 840 MPa für 50 Vol.-% SiC-Fasern berichtet (K.M. Prewo, J.J. Brennan, J. Mat. Sci. 17 (1982), pp. 1201).

Im US-Patent 4,314,852 wird die Herstellung von Komposit-Materialien aus SiC-faserverstärkten Gläsern beschrieben. Als Gläser werden ein Borosilikatglas, ein Erdalkalialumosilikatglas und ein hoch-SiO$_2$-haltiges Glas genannt. Die Herstellung erfolgt wiederum in zwei Prozeßschritten, die mit den im US-Patent 4,256,378 beschriebenen bis auf geänderte Mengen einzelner Komponenten identisch sind. Für die Komposit-Materialien werden sehr gute thermomechanische Eigenschaften erhalten. Für das SiC-faserverstärkte Borosilikatglas (SiC-Fasern von Nippon Carbon Company, Japan) werden bei Raumtemperatur Biegebruchfestigkeiten von knapp 500 MPa für unidirektionale und gut 350 MPa für bidirektionale Verstärkung beobachtet. Die Raumtemperatur-Biegebruchfestigkeitswerte für das SiC-faserverstärkte Erdalkalialumosilikatglas mit 50 Vol.-% Faseranteil liegen bei etwa 1000 MPa für bidirektionale und bei knapp 1400 MPa für unidirektionale Verstärkung; für das SiC-faserverstärkte hoch-$SiO_2$-haltige Glas liegen die Werte bei Faseranteilen von 30 bis 40 Vol.-% zwischen 400 und 550 MPa. Für die SiC-faserverstärkten Erdalkalialumosilikatglas-Komposite werden Bruchzähigkeiten von 16 MPa x $\sqrt{m}$ für bidirektionale und 27 MPa x $\sqrt{m}$ für unidirektionale Verstärkung berichtet.

Im US-Patent 4,485,179 wird die Herstellung von Komposit-Materialien aus SiC-faserverstärkten Glaskeramiken beschrieben. Als bevorzugtes Matrixmaterial wird das Ausgangsglas einer $Li_2O$-$Al_2O_3$-$SiO_2$-Glaskeramik mit $Nb_2O_2$, $Ta_2O_5$ und $ZrO_2$ als Keimbildner benannt. Der Herstellprozeß erfolgt wiederum wie in US-Patent 4,256,378 beschrieben, wobei die Suspension aus Glas, Wasser und Latexbinder besteht, der vor dem Heißpressen ausgebrannt werden muß. Die Umwandlung des Ausgangsglases in eine Glaskeramik kann entweder während des Heißpreßvorgangs erfolgen oder während einer zusätzlichen Temperaturbehandlung. Als besonders wichtiges Ergebnis der Materialauswahl wird die Verwendung von $Nb_2O_5$ und/oder $Ta_2O_5$ herausgestellt, da sich während des Herstellprozesses NbC beziehungsweise TaC-Schichten an den Grenzflächen zu den Fasern ausbilden, die eine weitere Reaktion zwischen der Faser und der Matrix bei hohen Temperaturen und unter oxidierenden Bedingungen verhindert. Darüber hinaus wird festgestellt, daß $TiO_2$, das in $Li_2O$-$Al_2O_3$-$SiO_2$-Glaskeramiken bevorzugt als Keimbildner verwendet wird, am besten vermieden oder wenigstens nur in sehr geringen Mengen verwendet werden sollte. Dies hängt damit zusammen, daß auch das $TiO_2$ mit der SiC-Faser reagiert, was jedoch im Gegensatz zu den Reaktionen zwischen SiC und $Nb_2O_5$ oder $Ta_2O_5$ zu einer starken Degradierung der SiC-Fasereigenschaften führt. Für Komposit-Materialien mit 50 Vol.-% Faseranteil werden bei Raumtemperatur im Drei-Punkt-Biegeversuch Biegebruchfestigkeiten von maximal knapp 1000 MPa erhalten. Bruchzähigkeiten wurden nicht gemessen, doch werden Werte über 11 MPa x $\sqrt{m}$ erwartet.

Die EP 0 126 017 entspricht einer Weiterentwicklung von US-Patent 4,485,179, indem durch die Verwendung eines anderen Matrixmaterials ausgezeichnete Biegebruchfestigkeiten und gute Oxidationsbeständigkeit bis zu Temperaturen von 1200°C erzielt werden. Diese Verbesserungen werden dadurch erreicht, daß anstelle der $Li_2O$-$Al_2O_3$-$SiO_2$-Glaskeramik eine Ba-modifizierte Cordieritbeziehungsweise eine Ba-Osumilit-Glaskeramik verwendet wird; dabei werden zunächst Pulver der zugehörigen Ausgangsgläser als Matrixmaterial verwendet, während die Umwandlung der Gläser in Glaskeramiken entweder während oder nach dem Heißpressen erfolgt. Als Keimbildner werden wiederum $Nb_2O_5$ und/oder $Ta_2O_5$ aufgrund ihres positiven Effektes auf die Ausbildung der Grenzfläche Faser/Matrix verwendet. Bei Raumtemperatur werden im Drei-Punkt-Biegeversuch Biegebruchfestigkeiten bis gut 700 MPa gemessen. Für ein Beispiel (Nr. 4) mit einer Ba-Osumilit-Glaskeramikmatrix wird besonders auf den linearen Verlauf der Spannungs-Dehnungskurve hingewiesen, der damit erklärt wird, daß die Matrix vollständig durchkristallisiert ist.

Die Herstellung von faserverstärkten Glaskeramiken auf der Basis von stöchiometrischem Cordierit wurde bisher noch nicht beschrieben. Dies hängt vermutlich mit der starken Kristallisationsneigung der Pulver dieser Ausgangsgläser knapp oberhalb der Transformationstemperatur und den daraus resultierenden Schwierigkeiten bei der Verdichtung zusammen.

In dem hier beschriebenen Stand der Technik sowie in anderen Veröffentlichungen arbeitet das Suspensions-Bad meist nach dem Wirbelbettprinzip, wie es 1969 von Bowen et al. (Brit. Pat. Spec. 1 279 252) beschrieben wurde.

In die Suspension wird Preßluft eingeblasen, um die Sedimentation des Pulvers zu verhindern und um die Faserbündel aufzuweiten, damit diese auch im Innern mit Matrix versetzt werden.

In den NASA Contr. Reporten 158 946 (1978) und 165 711 (1981) wird die Zugabe von 2% LUDOX (Warenzeichen DU PONT) zusätzlich zu den schon beschriebenen Bindern erwähnt, das heißt eine Zugabe von kollodialem $SiO_2$, wodurch eine Festigkeitssteigerung erzielt wird.

Bei dem oben beschriebenen Verfahren muß, falls Bindemittel zugesetzt werden, nach der Präparation der Fasern ein Ausbrennen der Binder erfolgen, bevor die Verdichtung des Prepregs mittels Heißpressens erfolgen kann. Dies bedeutet einen zusätzlichen Arbeitsgang; darüber hinaus besteht die Gefahr, daß Reste der "artfremden" Bindemittel in der Probe zurückbleiben und diese verunreinigen. Ebenso wie bei der alleinigen Nutzung von Alkohol als Binder ist die Bindung des Pulvers an die Fasern nach dem Ausbrennen schlecht, was durch teilweises Abfallen des Matrixmaterials von den Fasern zu Matrixverlusten führen kann.

Als zweite Methode, die in der Literatur genannt wird, ist die Sol-Gel-Technik zu erwähnen, wie sie in den nachfolgenden Arbeiten beschrieben wird:

Walker et al., Am. Cer. Soc. Bull. 62 (8) (1983), Seiten 916 bis 923,
Rice, Mat. Res. Soc. Sym. Proc. Vol. 32 (1984), Seiten 337 bis 345,
Lannutti, Clark, ebd, Seiten 369 bis 375,
Lannutti, Clark, ebd, Seiten 375 bis 381.

Hier wird die Verstärkungsfaser entweder durch ein Sol-Gel-Lösung des Matrixmaterials gezogen und dann aufgewickelt, oder aber sie wird trocken abgelegt und anschließend mit der Lösung imprägniert, wobei der Imprägnierungsvorgang mehrmals erfolgen kann.

Der Nachteil dieser Methode ist der zum Teil langwierige und komplizierte Trocknungsvorgang des Prepregs (Hydrolyse, Pyrolyse), wenn dieses poren- und rißfreie Komposite bilden soll. Aufgrund des großen Volumenschwundes der Lösungen stellt dies das Hauptproblem der Methode dar, zumal beim Übergang des Sols in den Gel-Zustand das Verdampfen der in der Sol-Gel-Lösung normalerweise vorliegenden Alkohole immer schwieriger wird. Werden die Fasern naß abgelegt, besteht beim kontinuierlichen Verarbeiten der Fasern die Gefahr, daß aufgrund der Luftfeuchte die Lösung zu hydrolisieren beginnt und die Viskosität sich ändert.

Will man die langwierigen Trocknungsprozesse umgehen, so bietet sich als abschließende Verdichtung das Heißpressen an, wie es von

Haluska, European Pat. Appl. 0 125 772 (1984),

Fitzer, Schlichting, High Temp. Sci. 13 (1980), Seiten 149 bis 172,

Fitzer, Proc. Int. Fac. in Densification and Sintering of Oxide and Non-Oxide Cer., 1978, Japan,

Schubert, Diss., Universität Karlsruhe (1977)

beschrieben wird.

JP 60, 246, 254 lehrt ein Verfahren, in dem eine wässrige Suspension eines keramischen Pulvers, die zusätzlich Whisker enthalten kann, mit einem Metallalkoxid versetzt wird, welches nach Hydrolyse die Partikel (keramische Teilchen und Whisker) mit einer Oxidschicht überzieht.

Aufgabe der vorliegenden Erfindung ist es, ein Komposit bereitzustellen, in welchem die Haftung zwischen Faser und Matrix optimal eingestellt werden kann; insbesondere soll ein Verfahren bereitgestellt werden, mit dem ein solches Komposit einfacher als nach den bisher bekannten Verfahren hergestellt werden kann.

Diese Aufgabe wird mit einem Verfahren mit den Merkmalen der Patentansprüche gelöst.

Bei dem erfindungsgemäßen Verfahren zur Herstellung faserverstärkter Gläser und Glaskeramiken werden Fasern mit einem Binder und Glaspulver dadurch beschichtet, daß sie kontinuierlich durch eine Suspension gezogen werden. Die Suspension enthält ein Pulver aus Glas, aus welchem die Matrix des faserverstärkten Materials gebildet wird, und eine Sol-Gel-Lösung, die als Binder die Haftung zwischen Faser und Matrixmaterial sowie zwischen den einzelnen Pulverteilchen des Matrixmaterials vermittelt. Die so imprägnierten Fasern werden zu einem Schichtpaket aufgewickelt, an dem anschließend die Hydrolyse und Polykondensation des Sols stattfindet. Die Verdichtung des so erhaltenen Prepregs erfolgt in einem Heißpreßvorgang.

In dem erfindungsgemäßen Komposit kann eine optimale Haftung zwischen Fasern und Matrix eingestellt werden; insbesondere gestattet dies das erfindungsgemäße Verfahren dadurch, daß sowohl die Zusammensetzung des Matrixmaterials als auch die der Sol-Gel-Lösung in weiten Grenzen variiert und aufeinander abgestimmt werden können. Neben der Einstellung der Haftung zwischen Faser und Matrix kann die Sol-Gel-Lösung, da sie sowohl das Glas- oder Glaskeramikpulver als auch die Fasern ummantelt, gleichzeitig die Funktion einer Reaktionsbarriere zwischen Matrix und Faser übernehmen.

Nachfolgend wird die Erfindung ausführlich beschrieben.

Als Metalloxide können erfindungsgemäß polykondensationsfähige Alkoxide, einzeln oder als Mischung, der Elemente aus der dritten bis vierten Hauptgruppe sowie der vierten und fünften Nebengruppe allein oder in Mischungen mit Metallalkoxiden der ersten und zweiten Hauptgruppe verwendet werden. Insbesondere können die Alkoxide von Natrium, Kalium, Magnesium, Kalzium, Barium, Aluminium, Silicium, Titan, Zirkon, Hafnium und Tantal verwendet werden.

Die nachstehend für Kieselsäureester gemachten Aussagen treffen auch für die anderen, erfindungsgemäß verwendbaren Metallalkoxide zu.

Die Nachteile der Suspensions-Methode, wie schlechte Haftung auf der Faser und Notwendigkeit des Ausbrennens von Bindern, und der Sol-Gel-Methode, hoher Volumenschwund und sehr langwierige Verarbeitungszeiten, können dadurch überwunden werden, daß definiert anhydrolisierte Kieselsäureester mit einem Glaspulvergemisch versetzt und anschließend auf SiC-Fasern aufgezogen werden. Die anhydrolisierten Kieselsäureester fungieren als "chemische Koppler" zwischen den einzelnen Glaspulverteilchen und gleichzeitig als Haftvermittler zur Faser. Besonders die Polykondensation des eingesetzten Kieselsäureesters, insbesondere Kieselsäuretetramethyl- beziehungsweise -ethylesters geht entscheidend in die Beschichtungsfähigkeit ein, da beide Materialien, Faser und Glaspulver, durch diese Lösung benetzt werden müssen. Es hat sich herausgestellt, daß die Viskosität der verwendeten Sol-Gel-Lösungen in dem Bereich zwischen 2,0 bis 2,4 cST liegen müssen, um eine gute Benetzung der Glaspulverteilchen und der SiC-Fasern zu bekommen. Die Schichtdicken werden zum einen über die Geschwindigkeit, mit der die Fasern durch das Bad gezogen werden, und zum anderen durch die eingestellte Viskosität der Beschichtungslösung bestimmt. Einen besonderen Vorteil der verwendeten Sol-Gel-Lösungen stellt die Möglichkeit dar, daß durch unterschiedliche Lösungsmittel die Lösungen hydrophil beziehungsweise hydrophob eingestellt werden können.

Die Herstellung einer Sol-Gel-Lösung soll hier am Beispiel des Kieselsäuretretramethylesters kurz beschrieben werden. Die verwendeten Sol-Gel-Lösungen werden, bevor die Glaspulverteilchen zugesetzt werden, wie folgt angesetzt: Kieselsäuretetramethylester wird mit destilliertem Wasser und Essigsäure (Eisessig) im Verhältnis 1 : 1 - 10 : 1 - 3 versetzt. Die Hydrolysegeschwindigkeit wird durch die Konzentration des Wasser und der Essigsäure bestimmt, kann aber auch vorteilhafterweise durch den Verdünnungsgrad mit den verschiedensten Lösungsmitteln gesteuert werden. In der Regel werden dazu niedere Alkohole wie zum Beispiel Methanol, Ethanol, n-Propanol, i-Propanol, n-Butanol etc., Ketone wie zum Beispiel Aceton, Methylethylketon etc., und Carbonsäureester wie zum Beispiel Essigsäuremethylester, Essigsäureethylester, Essigsäurebutylester etc., verwendet. Die Hydrolyse erfolgt zuerst in konzentrierten Lösungen, wobei der Verdünnungsgrad etwa einem Verhältnis Kieselsäureester zu Lösungsmittel von 1 : 1 - 10 entspricht. Die Viskosität solcher Konzentrate liegt nach erfolgter Hydrolyse zwischen 2,4 bis 3,2 cST. Das Konzentrat wird anschließend mit dem gewählten Lösungsmittel soweit verdünnt, daß die Viskosität zwischen 2,0 bis 2,4 cST liegt. In diese Sol-Gel-Lösung werden die Glaspulverteilchen eingebracht, und zwar in einer solchen Menge, daß das Gewichtsverhältnis von anorganischem, sinterfähigem, silikatischem Pulver und Lösung im Bereich von 1 : 5 bis 1 : 1 liegt. Ein besonderer Vorteil der beschriebenen Sol-Gel-Lösung ist deren Verwendbarkeit bis drei Monaten.

Durch die Anpassung der Sol-Gel-Lösungen an die chemische Zusammensetzung des verwendeten Glaspulvers gelingt es, besonders über die Steuerung der Reaktivität der Sol-Gel-Lösung über den Hydrolysegrad des Kieselsäureesters und durch die Möglichkeit der Verwendung von polaren-unpolaren, protischen-aprotischen Lösungmitteln und deren Mischung, die Bindung zwischen Faser und Glaspulver zu optimieren. Das bedeutet, daß durch gezielte chemische Veränderung der Sol-Gel-Lösung an die Fasern sowie Glaspulverteilchen angepaßte, spezifizierte, den Kontakt zwischen Fasern und Glaspulverteilchen vermittelnde Oberflächen hergestellt werden können, die zur wesentlichen Verbesserung der Bindung zwischen Glaspulverteilchen und den Fasern führen.

Nachdem die Faser durch die Suspension gezogen wurde, wird sie auf einer Trommel aufgewickelt, wobei zunächst Faden neben Faden abgelegt wird und dann zur Erzielung dickerer Schichten mehrere Lagen übereinander gelegt werden. Um eine homogene Verteilung zwischen Faser und Matrix zu erreichen, wird oberhalb des Suspensionsbades durch eine Quetschvorrichtung die Menge an anhaftendem Glas reguliert.

Nach dem Wickelvorgang wird der Prepreg von der Trommel genommen. Die anhydrolysierte Lösung wird durch eine Temperaturbehandlung zwischen 20 und 250°C bei einer Luftfeuchte von 10 bis 13 g/m$^3$ vollständig hydrolysiert. Anschließend erfolgt die endgültige Ausbildung der Oxidschicht durch eine Temperaturbehandlung bei 250 bis 450°C in 0,05 bis 24 Stunden.

Nach diesen Prozeßschritten wird ein Prepreg erhalten, der recht fest ist und daher gut weiterverarbeitet werden kann. Aus dem zylinderförmigen Prepreg werden planare Prepregs geschnitten; diese werden anschließend wahlweise entweder gleich heißverpreßt oder aber gestapelt, um dickere Proben zu erhalten; dabei können die einzelnen Lagen gleich orientiert sein, um eine unidirektionale Verstärkung zu erhalten oder aber verschieden orientiert sein, um eine mehr oder weniger starke isotrope Verstärkung einzustellen.

Nach dem Einlegen der Prepreglagen in die Heißpresse erfolgt der Heißpreßvorgang in mehreren Prozeßschritten. Zunächst wird unter Anlegen eines Vakuums auf die Glastransformationstemperatur Tg aufgeheizt. Etwa bei $T_g$ des Glases wird der Preßstempel auf die Probe gelegt, was zu einem Preßdruck von etwa 0,2 MPa führt. Anschließend wird unter Vakuum oder in einer Schutzgasatmosphäre auf die Preßtemperatur erhitzt. Bedingt durch die hohe Reaktivität des Sol-Gels und in Abhängigkeit von der Kristallisationsneigung des Matrixglases findet bereits während des Aufheizens eine mehr oder weniger starke Verdichtung statt, wobei bei einigen Matrixmaterial-Sol-Gel-Kombinationen zwei Drittel der Gesamtverdichtung erreicht werden. Bei der Preßtemperatur, die bei den hier verwendeten Materialien zwischen 1150 und 1400°C liegt, erfolgt dann die Verdichtung, wobei Preßdrücke bis 10 MPa und Preßzeiten von 5 bis 10 min meist völlig ausreichend sind. Es können somit niedrigere Drücke und kürzere Prozeßzeiten (bei vergleichbaren Temperaturen) als bei der Slurry-Methode verwendet werden. Dies ist nach derzeitigem Verständnis auf die hohe Reaktivität des Sol-Gels, das jede Faser und jedes Matrixkorn umgibt, zurückzuführen. Das Sol-Gel übernimmt in diesem Prozeßschritt eine doppelte Funktion, in dem es einerseits die Faser vor einer eventuellen destabilisierenden Reaktion zwischen Faser und Matrix oder Faser und Atmosphäre schützt und andererseits die Prozeßzeiten verkürzt. Die Bedeutung dieses zweiten Punktes liegt darin, daß manche Fasern, insbesondere die SiC-Faser, bei Temperaturen von etwa 1300°C und mehr, unabhängig von der Atmosphäre instabil sind (siehe zum Beispiel A.S. Fareed et al., Amer. Cer. Soc. Bull., 66 (1987), Seiten 353 bis 358) und daher diesen Temperaturen nur so kurz wie unbedingt nötig ausgesetzt sein sollten.

Das erfindungsgemäße Verfahren hat folgende Vorteile.

Es werden keine artfremden Binder in Form von Wachsen, Netzmitteln etc. verwendet, so daß der Arbeitsgang des Ausbrennens dieser Stoffe entfällt und die Gefahr, daß verunreinigende Reste in dem Prepreg zurückbleiben, eliminiert ist.

Durch die gut einstellbare Bindung zwischen Matrix und Faser auch ohne die obengenannten Bindemittel wird eine gleichmäßige Anbindung an die Faser und damit eine homogene Verteilung erzielt. Das Problem der homogenen Einbettung der Fasern reduziert sich dadurch auf eine präzise Steuerung des Wickelvorgangs; dies ist ein rein technologisches Problem. Die gute Homogenität des Prepregs geht auch beim Sägen auf Maß mit einer Diamantsäge nicht verloren, da es zu keinem Verlust oder zu keiner lokalen Anreicherung der Matrix kommt. Gegenüber dem reinen Sol-Gel-Verfahren besteht der Vorteil, daß nur ein geringer Volumenanteil des die Fasern umgebenden Materials über das Sol-Gel eingebracht wird, da die eigentliche Matrix durch das Glaspulver gestellt wird. Die starke Schrumpfung des Sols bei der Hydrolyse und Polykondensation spielt daher für den Kompositwerkstoff nur eine untergeordnete Rolle.

Bei geringer Verträglichkeit zwischen Faser und Matrix wird durch die Beschichtung beider Komponenten mit der Sol-Gel-Lösung die Verträglichkeit deutlich erhöht. Ein vorheriges Schutz-Coating der Fasern kann daher in den meisten Fällen entfallen. Ebenso wird beim Heißpreßvorgang die Prozeßatmosphäre nicht durch eine eventuelle Reaktion zwischen Faser und Prozeßatmosphäre eingeschränkt. Dadurch daß die Sol-Gel-Lösung einen Beitrag zu dem die Fasern umgebenden Material liefert, ist die Gründichte (Dichte des Prepreg) größer als bei Verfahren, bei denen artfremde Binder und/oder Alkohole verwendet werden.

Aufgrund der hohen Reaktivität der Oberfläche des kondensierten Sols wird der Heißpreßvorgang erleichtert und kann bei niedrigeren Temperaturen durchgeführt werden.

Das erfindungsgemäße Verfahren ist weitgehend unabhängig von den hier aufgeführten Materialien und läßt daher eine breite Palette von Gläsern, zur Herstellung von Kompositen zu, wobei sowohl durch die Wahl der Zusammensetzung der Sol-Gel-Lösung als auch der Glaszusammensetzung die Eigenschaften gezielt verändert werden können beziehungsweise eine Anpassung des Glases an das Fasermaterial möglich ist. Besonders die Optimierung der Eigenschaften des Kompositmaterials wie Festigkeit, Bruchzähigkeit, thermische Ausdehnung etc. läßt sich so schneller und übersichtlicher durchführen. So wird zum Beispiel durch die Benutzung ausschließlich eines reinen anhydrolisierten Kieselsäureesters der Gesamt-$SiO_2$-Gehalt des die Fasern umgebenden glasigen Materials angehoben und dadurch eine Anhebung der Transformationstemperatur des Glases sowie eine Verschiebung des Absinkens der Bruchfestigkeit zu höheren Temperaturen hin erzielt.

Ebenso können alle Arten von anorganischen Fasern, deren Hauptbestandteile SiC, $Si_3N_4$, $Al_2O_3$, $ZrO_2$, $SiO_2$, Mullit, und/oder Kohlenstoff sein können, mit Nebenbestandteilen aus Si, Ti, Zr, Al, C, O, N, wie zum Beispiel SiC-, SiC-$Si_3N_4$-, $Si_3N_4$-, $Al_2O_3$-, $ZrO_2$-, Mullit- und C-Fasern eingesetzt werden. Möglich ist außerdem die Keramisierung des Glases nach dem Heißpressen beziehungsweise während des Pressens zur Glaskeramik.

Mit dem erfindungsgemäßen Verfahren können Kompositmaterialien mit Eigenschaften hergestellt werden, die deutlich über den Stand der Technik hinausgehen. Für SiC-faserverstärktes Borosilikatglas, hergestellt unter Verwendung einer $SiO_2$-haltigen Sol-Gel-Lösung, werden zum Beispiel bei einer unidirektionalen Verstärkung und einem Faservolumenanteil von 40% im Drei-Punkt-Biegeversuch Biegebruchfestigkeiten von bis zu 800 MPa beobachtet; die Bruchzähigkeitswerte betragen 20 MPa x $\sqrt{m}$. Bei der Messung von Spannungs-Dehnungsdiagrammen fällt auf, daß die Spannungs-Dehnungskurven bis fast zur Bruchspannung hin linear verlaufen, was bei vergleichbaren Kompositmaterialien bisher nicht beobachtet wurde. Dies ist vermutlich unter anderem auf die Bildung der $SiO_2$-haltigen Grenzfläche zwischen Matrix und Faser zurückzuführen.

Bei der Herstellung von SiC-faserverstärkten Erdalkalialumosilikatgläsern unter Verwendung von $SiO_2$-haltigen Sol-Gel-Lösungen werden nicht nur hohe Biegebruchfestigkeiten von zum Beispiel ca. 1300 MPa, sondern überdies hohe Bruchzähigkeiten von zum Beispiel 36 ± 7 MPa x $\sqrt{m}$ erzielt, die deutlich über dem Stand der Technik liegen. Da gerade die Erhöhung der Bruchzähigkeit ein wesentlicher Aspekt dieser Materialentwicklung ist, bedeuten Werte von 36 MPa x $\sqrt{m}$ und mehr einen deutlichen Fortschritt gegenüber dem Stand der Technik, in dem Werte von maximal 27 MPa x $\sqrt{m}$ angegeben werden.

Des weiteren gestattet es das erfindungsgemäße Verfahren, faserverstärkte Glaskeramiken auf der Basis von stöchiometrischem Cordierit herzustellen. Die eingangs erwähnten Schwierigkeiten beim Verdichten, die aus der starken Kristallisationsneigung der Pulver dieser Ausgangsgläser resultieren, werden durch die Verwendung der Sol-Gel-Lösungen überwunden und es werden Eigenschaftswerte erreicht, die an die Werte von SiC-faserverstärkten Borosilikatgläsern heranreichen.

Während bei der SiC-Faserverstärkung die besten mechanischen Eigenschaften bei der Verwendung von Erdalkalialumosilikatgläsern als Matrixmaterial erzielt werden, so werden bei der C-Faserverstärkung die besten Werte mit Borosilikatgläsern und $B_2O_3$-modifizierten Erdalkalialumosilikatgläsern als Matrixmaterial beobachtet. In beiden Fällen werden maximale Biegebruchfestigkeiten oberhalb von 1200 MPa erzielt. Die maximalen Bruchzähigkeiten liegen bei etwa 35 MPa x $\sqrt{m}$ für das Borosilikatglas und bei etwa 25 MPa x $\sqrt{m}$ für das $B_2O_3$-modifizierte Erdalkalialumosilikatglas.

Unabhängig von den verwendeten anorganischen Fasern und Matrixmaterialien sowie Sol-Gel-Zusammensetzungen können mit dem erfindungsgemäßen Verfahren hohe Faservolumenanteile bis zu 65% bei gleichbleibend guten mechanischen Eigenschaften erzielt werden.

Aus dieser Übersicht geht hervor, daß bei Verwendung einer Sol-Gel-Lösung als zusätzliche Komponente in einer Suspensionslösung die Optimierung von faserverstärkten Gläsern und Glaskeramiken entscheidend erweitert wird. Die Überführung der Lösungsoberflächenschichten auf dem Matrixmaterial und den Fasern in ein Coating während des Herstellprozesses macht die Herstellung von Schutz-Coatings für die Fasern weitgehend überflüssig.

Die hier aufgeführten Gläser und Glaskeramiken, Fasern und Sol-Gel-Lösungen haben nur exemplarischen Charakter. Es liegt auf der Hand, daß für den Durchschnittsfachmann eine Vielzahl von weiteren Kombinationen zur Herstellung von faserverstärkten Kompositen nach dem erfindungsgemäßen Verfahren möglich sind.

Im folgenden wird die Erfindung anhand einiger bevorzugter Ausführungsbeispiele in Verbindung mit den Zeichnungen und der Tabelle näher beschrieben.

Figur 1    zeigt das Spannungs-Dehnungs-Diagramm eines SiC-faserverstärkten Borosilikatglases, hergestellt unter Verwendung einer $SiO_2$-haltigen Sol-Gel-Lösung;

Figur 2    zeigt das Spannungs-Dehnungs-Diagramm eines SiC-faserverstärkten Borosilikatglases, hergestellt unter Verwendung einer DURAN-haltigen (DURAN[R]: Borosilikatglas der Schott Glaswerke, Mainz) Sol-Gel-Lösung;

Figur 3    zeigt das Spannungs-Dehnungs-Diagramm eines SiC-faserverstärkten Erdalkalialumosilikatglases, hergestellt unter Verwendung einer $SiO_2$-haltigen Sol-Gel-Lösung;

Figur 4    zeigt das Spannungs-Dehnungs-Diagramm eines C-faserverstärkten Borosilikatglases, hergestellt unter Verwendung einer $SiO_2$-haltigen Sol-Gel-Lösung.

In der Tabelle sind verschiedene erfindungsgemäße faserverstärkte Verbundwerkstoffe mit unterschiedlichen Zusammensetzungen und ihre mechanischen Eigenschaften aufgelistet. Als Fasermaterial wurden für diese Beispiele SiC-Fasern von Nippon Carbon Company, Japan, und C-Fasern, T 800 und T 1000, von Torayca, Japan, verwendet. T 800 ist eine Faser mit Zugfestigkeiten von ca. 5800 MPa, einem E-Modul von ca. 300 GPa und einer Bruchdehnung von 1,9%. Die C-Faser mit der Bezeichnung T 1000 weist bei gleichem E-Modul eine Zugfestigkeit von 7000 MPa auf. Als Matrixmaterialien wurden Gläser und Glaskeramikausgangsgläser der Schott Glaswerke, Mainz, verwendet; im einzelnen sind dies das Borosilikatglas DURAN[R] mit der Typennummer 8330, das $P_2O_5$-haltige Erdalkalialumosilikatglas SUPREMAX mit der Typennummer 8409, ein $B_2O_3$-haltiges Erdalkalialumosilikatglas mit der Typennummer 8252, das mit GM 30870 bezeichnete Ausgangsglas zu einer stöchiometrischen Cordieritglaskeramik, sowie ein 3 Gew.-% BaO und ein 3,5 Gew.-% $TiO_2$ enthaltendes GM 30870-Glas. Als Sol-Gel-Lösungen wurden solche verwendet, die $SiO_2$-, $TiO_2$- oder DURAN-Gläser ergeben. Die Synthese für das Multikomponentenglas DURAN erfolgt aus den Alkoxiden der einzelnen Elemente in den entsprechenden Mengenverhältnissen. Die einzelnen Alkoxide können in beliebiger Reihenfolge zusammengegeben und dann, wie beim $SiO_2$-Sol-Gel beschrieben, in analoger Weise durch gemeinsame Hydrolyse, Polykondensation und Temperaturbehandlung zum oxidischen Glas ausgebildet werden, das die Eigenschaften eines konventionell hergestellten DURAN-Glases besitzt.

Nachfolgend wird für drei verschiedene Kompositzusammensetzungen (Beispiele 1, 10 und 24) aus der Tabelle das erfindungsgemäße Verfahren ausführlich dargestellt.

Beispiel 1:

Als Beispiel sei die Herstellung eines Komposits aus DURAN-Glas mit eingelagerten SiC-Fasern als Verstärkungskomponente geschildert.

Zur Herstellung der Prepregs werden die Fasern im Anlieferungszustand (mit Schlichte versehen) kontinuierlich von der Vorratstrommel abgenommen und durch einen Rohrofen (Temperatur 600°C) gezogen, um die Schlichte abzubrennen. Anschließend wird das Faserbündel über Umlenkrollen in das Wirbelbett geführt. In diesem befindet sich das Glaspulver/Sol-Gel-Bad. Die von unten in das Bad eingeblasene Preßluft erfüllt zwei Zwecke:

a) das Sedimentieren des Glaspulvers in der Lösung wird verhindert, und

b) durch die Durchströmung wird das Faserbündel mit ca. 400 Monofilamenten aufgespreizt, und eine innige Beschickung des Bündels mit Matrix wird möglich.

Zuviel mitgenommene Suspension wird mit einer Abquetschvorrichtung zurückgehalten und läuft in das Wirbelbett zurück.

Als Beispiel für die Zusammensetzung der Suspension sei hier eine Mischung aus 100 g Glaspulver (Körnung < 40 $\mu$m) und 250 g Sol-Gel-Lösung auf der Basis einer $SiO_2$-Zusammensetzung angegeben. Die anhydrolisierte, Kieselsäuretetramethylester enthaltende Sol-Gel-Lösung ist soweit stabilisiert, daß sie eine weitgehend konstante Viskosität über einen Zeitraum von drei Monaten bei Raumtemperatur besitzt. Die beschichteten Fasern werden, von einer Steuereinheit gelenkt, nebeneinander auf einer aus Teflon bestehenden Wickeltrommel abgelegt. Diese Trommel hat einen hexagonalen Querschnitt, um möglichst große und plane Prepregs bei minimalem Materialverlust und minimaler Faserkrümmung zu erhalten. Die mit Matrixmaterial imprägnierten Faserbündel werden bis zur Trockenheit auf der Wickeltrommel belassen. Ist diese erreicht, werden sie abgenommen und zur vollständigen Hydrolyse des Sols 24 Stunden lang bei 80°C und einer Luftfeuchte von 10 bis 13 $g/m^3$ gelagert. Die anschließende Polykondensation erfolgt bei 250°C über einen Zeitraum von ebenfalls 24 Stunden. Mit einer Diamantsäge werden die fertigen Prepregs auf das für das Heißpressen benötigte Format gesägt.

Das Heißpressen der Proben erfolgt in einer Graphitmatrix bei 1200°C und einem Preßdruck von 10 MPa. Die Preßdauer beträgt 5 Minuten. Die Pressung wird in Stickstoffatmosphäre durchgeführt. Die Bestimmung des Ausdehnungskoeffizienten $\alpha$ in Faserrichtung ergab für $\alpha$ 20/300 einen Wert von 1,6 x $10^{-6} K^{-1}$ und für $\alpha$ 20/600 einen Wert von 2,2 x $10^{-6} K^{-1}$. DURAN-Glas weist einen Ausdehnungskoeffizien-ten $\alpha$ 20/300 von 3,25 x $10^{-6} K^{-1}$ auf. Bei den Kompositen war nur ein schwaches Abknicken der Dilatometerkurve bei ca. 620°C zu beobachten. Dieses Abknicken liegt somit 90°C über dem $T_g$ der reinen Glasmatrix ($T_g$ von DURAN: 530°C). Die Absenkung des Ausdehnungskoeffizienten und die Erhöhung der Tg-Temperatur des Komposites sind auf den erhöhten $SiO_2$-Gehalt, der durch die Sol-Gel-Lösung eingebracht wird, zurückzuführen.

Beispiel 10:

Das beschriebene Verfahren kann auch zur Herstellung eines Verbundwerkstoffes benutzt werden, dessen Matrix aus SUPREMAX und dessen Verstärkungskomponente wiederum aus kontinuierlichen SiC-Fasern besteht.

Die Herstellung des Prepregs erfolgt analog Beispiel 1, wobei ebenfalls als Zusammensetzung der Suspension eine Mischung aus 100 g Glaspulver (Körnung < 40 $\mu$m) und 250 g Sol-Gel-Lösung verwendet wird.

Die Prepregs werden bei 1250°C heißverpreßt. Der Preßdruck beträgt 5 MPa, die Preßdauer 5 Minuten. Der Preßvorgang findet ebenfalls in Stickstoffatmosphäre statt.

Beispiel 24:

Es wurde als Matrixkomponente das mit GM 30870 bezeichnete stöchiometrische Cordieritglas und zum Infiltrieren der SiC-Faserbündel eine Suspension aus einer Mischung von 100 g Glaspulver (Körnung < 40 $\mu$m) und 300 g Sol-Gel-Lösung verwendet.

Die Herstellung des Prepregs erfolgt erneut analog Beispiel 1. Das Heißpreßverfahren unterscheidet sich gegenüber Beispiel 1 und 10 dadurch, daß zunächst der Preßling drucklos auf 850°C erhitzt wird. Nach dem Aufbringen eines Druckes von 2 MPa wird die Temperatur auf 1310°C erhöht. Hier erfolgt eine weitere Druckerhöhung auf 5 MPa mit einer Preßdauer von 5 Minuten. Die Umwandlung des Glases in eine Glaskeramik erfolgt während des Aufheizens bis zur maximalen Temperatur.

Die mechanischem Eigenschaften, das heißt Biegebruchfestigkeit und Bruchzähigkeit, der drei Komposite, deren Herstellung zuvor anführlich beschrieben wurde, sind in der Tabelle zusammen mit den anderen erfindungsgemäßen Ausführungsbeispielen, die mit entsprechenden Verfahren hergestellt wurden, aufgelistet. Lediglich die Beispiel 6 und 8 in der Tabelle liegen außerhalb der Lehre der Patentanmeldung. Beispiel 6 wurde mit einem aus dem Stand der Technik bekannten Verfahren hergestellt, um die überlegenen Eigenschaften der erfindungsgemäßen Komposite durch Vergleich herauszustellen. Beispiel 8 dient dazu, die Wirkungsweise der Reaktionsbarriere zwischen Faser und Matrix zu demonstrieren und ist aufgrund der sehr geringen mechanischen Festigkeit nicht zu den erfindungsgemäßen Kompositwerkstoffen zu rechnen.

Die in der Tabelle angegebenen Biegebruchfestigkeiten wurden meist im Drei-Punkt-Biege-Verfahren gemessen. Dazu wurden Proben mit folgenden Abmessungen verwendet: Länge 90 bis 100 mm, Breite 3,5 bis 8 mm und Höhe 2,5 bis 3,5 mm; als Auflagenabstand wurden 75 oder 80 mm so gewählt, daß das Verhältnis Auflagenabstand/Höhe stets größer als 18 ist. In einzelnen Beispielen (Beispiel 1, 10 und 24) wurden Vier-Punkt-Biegebruchfestigkeiten gemessen; in diesen Fällen wurden Stäbe mit der Abmessung $43,0 \times 4,6 \times 3,5$ mm$^3$ verwendet; die inneren und äußeren Auflagenabstände betrugen 20 beziehungsweise 40 mm. Für die Bruchzähigkeitsmessungen wurde die gleiche Versuchsanordnung gewählt, wobei allerdings eingekerbte Stäbe mit Kerben von 1 bis 2 mm Tiefe, je nach Probenhöhe und 100 $\mu$m Breite verwendet wurden. Den berechneten Standardabweichungen liegen Serienmessungen mit jeweils fünf Einzelmessungen zugrunde.

Unter Bezugnahme auf die Tabelle werden im folgenden die Beispiel näher erläutert.

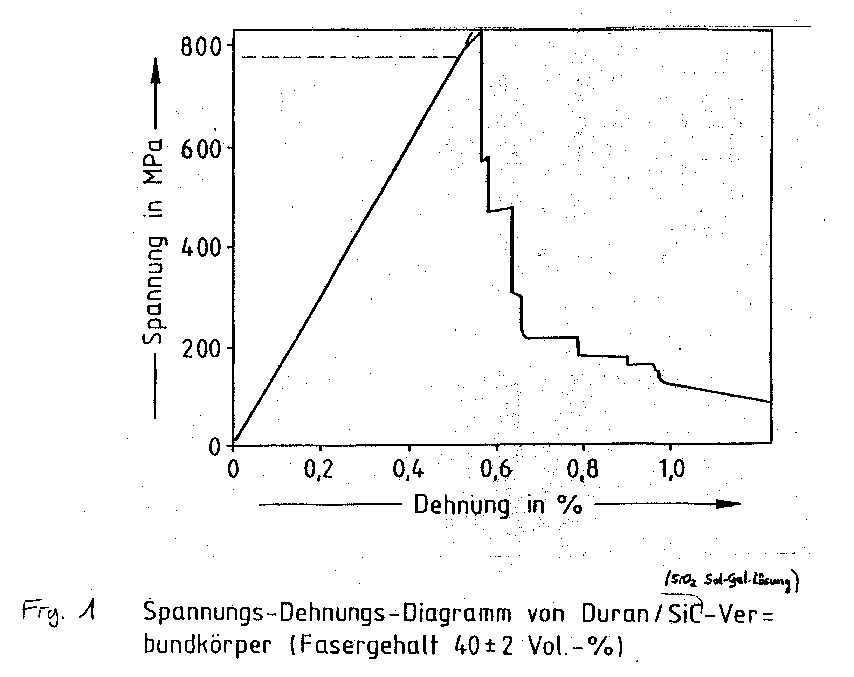

Die ersten neun Beispiel betreffen SiC-faserverstärktes DURAN. Die Beispiele 1 und 2 zeigen, daß sehr hohe Festigkeiten sowohl bei Raumtemperatur als auch bei 600°C erreicht werden. Bei dem Vergleich mit den folgenden Beispielen und mit dem Stand der Technik ist zu berücksichtigen, daß es sich bei den Beispielen 1 und 2 um Vier-Punkt-Biegebruchfestigkeiten handelt, die im allgemeinen niedriger liegen als Drei-Punkt-Biegebruchfestigkeiten. Ein typisches Spannungs-Dehnungs-Diagramm zu Beispiel 1 ist in Figur 1 dargestellt. Aus dem Vergleich von Beispiel 1 und 3 geht hervor, daß die Preßtemperatur für die Herstellung der Komposite unkritisch ist; sie kann für die hier gewählte Materialkombination relativ weit variiert werden, ohne die Eigenschaften der Komposite wesentlich zu verändern. Die Beispiele 3 und 4 zeigen, daß die Biegebruchfestigkeiten mit der Erhöhung des Faservolumenanteils ansteigen. Bei einem Faservolumenanteil von 48% werden maximale Festigkeiten von über 920 MPa beobachtet, die deutlich über den Stand der Technik hinausgehen. Bei einer weiteren Erhöhung des Faservolumenanteils auf 54%, Beispiel 5, sinken die Festigkeiten wieder etwas ab, während die mittlere Bruchzähigkeit von 20 MPa x $\sqrt{m}$ auf 25 MPa x $\sqrt{m}$ ansteigt. Die hier berichteten Bruchzähigkeiten für die Verbundkombination SiC-Faser/Borosilikatglas liegen weit über dem Stand der Technik. Das Absinken der Festigkeitswerte bei einer Erhöhung des Faservolumenanteils von 48% auf 54% in Beipiel 5 wird nach derzeitigem Verständnis auf eine ungleichmäßige Ablegung der Fäden während des Wickelvorgangs zurükgeführt.

Im Beispiel 6 wurde, wie im Stand der Technik beschrieben, eine binderfreie Suspension verwendet, bei der anstelle der SiO$_2$-Sol-Gel-Lösung als Suspensionslösungsmittel Propanol eingesetzt wurde. Bei der Herstellung des Kompositwerkstoffes fällt auf, daß das Glas relativ schlecht an den Fasern haftet, so daß eine ungleichmäßige Einbettung der Fasern zu erwarten ist. Dies drückt sich dann auch in den Biegebruchfestigkeiten aus, die im Mittel um ca. 100 MPa unter den werten der entsprechenden erfindungsgemäßen Komposite liegen und insbesondere stark streuen, was sich in der Standardabweichung von 127 MPa niederschlägt.

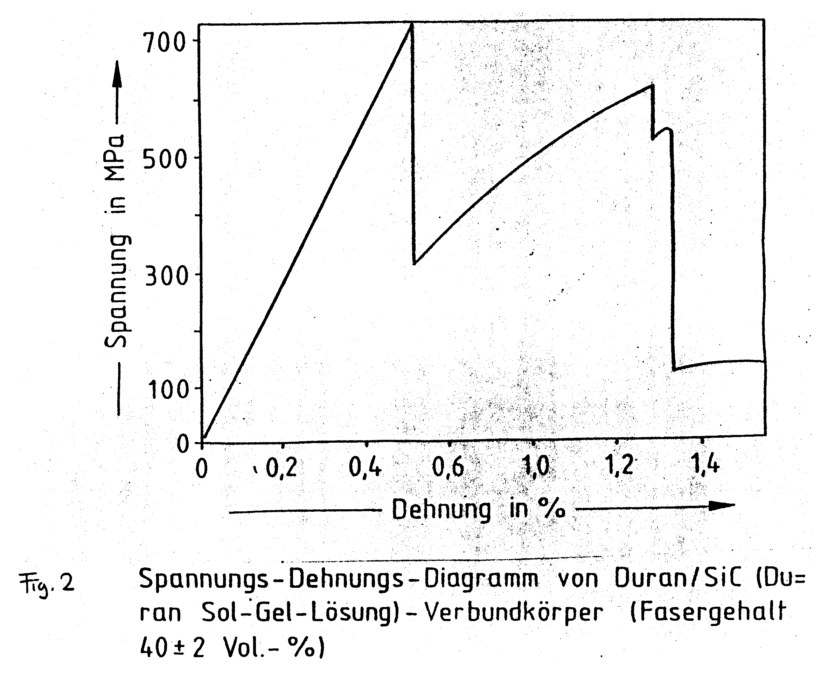

Der Vergleich von Beispiel 3 und 7 zeigt, daß verschiedene Sol-Gel-Lösungen verwendet werden können, solange keine - oder nur geringe - chemische Reaktionen zwischen Matrix, Faser und Sol-Gel-Lösung auftreten. Allerdings bedeutet die Gleichheit der gemessenen Biegebruchfestigkeiten nicht, daß sich beide Kompositmaterialien in jeder Beziehung gleich verhalten. Aus Figur 2 geht hervor, daß sich das SiC-faserverstärkte DURAN, hergestellt mit einer DURAN-Sol-Gel-Lösung, im Spannungs-Dehnungsverlauf ganz anders verhält, als bei Verwendung einer SiO$_2$-Sol-Gel-Lösung, Figur 1. Worauf die Unterschiede in dem Spannungs-Dehnungs-Verhalten zurückzuführen sind, wird zur Zeit noch nicht verstanden. Auf alle Fälle zeigt das in Figur 2 dargestellte Material nach dem ersten Faserbruch ein ausgesprochen "plastisches" Verhalten.

Sind in den Beispielen 1 bis 8 Daten für unidirektional verstärkte Verbundwerkstoffe angegeben, so zeigt Beispiel 9 Daten für bidirektional verstärktes DURAN. Die Fasern sind abwechselnd in 0° und 90° Orientierung ausgerichtet. Die in der Tabelle aufgeführten Biegebruchfestigkeiten wurden parallel zu einer Faserorientierung bestimmt. Obwohl dabei nur die Hälfte der Fasern belastet wird, sinkt die mittlere Festigkeit nur um etwa 30% gegenüber dem unidirektional verstärkten Glas auf 519 ± 74 MPa.

Die obere Einsatztemperatur von faserverstärktem DURAN liegt aufgrund der Transformationstemperatur des DURANs von 530°C etwa bei 500°C. Höhere Einsatztemperaturen werden mit dem Erdalkalialumosilikatglas SUPREMAX, dessen T$_g$-Wert bei 730°C liegt, erzielt.

In den Beispielen 10 bis 13 sind die Eigenschaften und Prozeßparameter von Verbundwerkstoffen aus SiC-faserverstärktem SUPREMAX aufgeführt. Es zeigt sich, daß mit SUPREMAX als Matrixmaterial deutlich höhere Bruchfestigkeiten und Bruchzähigkeiten erreicht werden, als mit DURAN. Dies wird besonders deutlich anhand des Vergleichs der Beispiele 3 mit 12 und 4 mit 13, die jeweils annähernd gleiche Faservorlumenanteile besitzen.

Nach derzeitiger Erkenntnis ist weniger eine chemische Reaktion zwischen Faser, Matrix und Sol-Gel-Lösung für die Steigerung der Biegebruchfestigkeits- und Bruchzähigkeitswerte verantwortlich, als vielmehr der größere Ausdehnungskoeffizient des SUPREMAX-Glases ($\alpha$ = 4,1 x 10$^{-6}$/K) im Vergleich zum DURAN-

Glas ($\alpha$ = 3,25 x $10^{-6}$/K). Das SUPREMAX-Glas schrumpft stärker auf die Fasern ($\alpha$ = 2,7 x $10^{-6}$/K) auf als das DURAN-Glas und haftet dadurch besser.

Die Beispiele 10 und 11 zeigen, daß selbst bei relativ niedrigen Faservolumenanteilen von 36 beziehungsweise 37% hohe Biegebruchfestigkeitswerte erreicht werden. Dabei hat die Optimierung der Prozeßparameter, insbesondere des Preßdruckes, zu einer deutlichen Biegebruchfestigkeitssteigerung bei Beispiel 11 gegenüber Beispiel 10 geführt.

Die maximalen Bruchzähigkeitswerte von 36 MPa x $\sqrt{m}$ in Beispiel 13 liegen, wie vorstehend erwähnt, weit über dem Stand der Technik, in welchem Werte von 27 MPa x $\sqrt{m}$ angegeben werden, obwohl der Faservolumenanteil von Beispiel 13 mit 45% noch um 5% niedriger liegt, als derjenige im Stand der Technik.

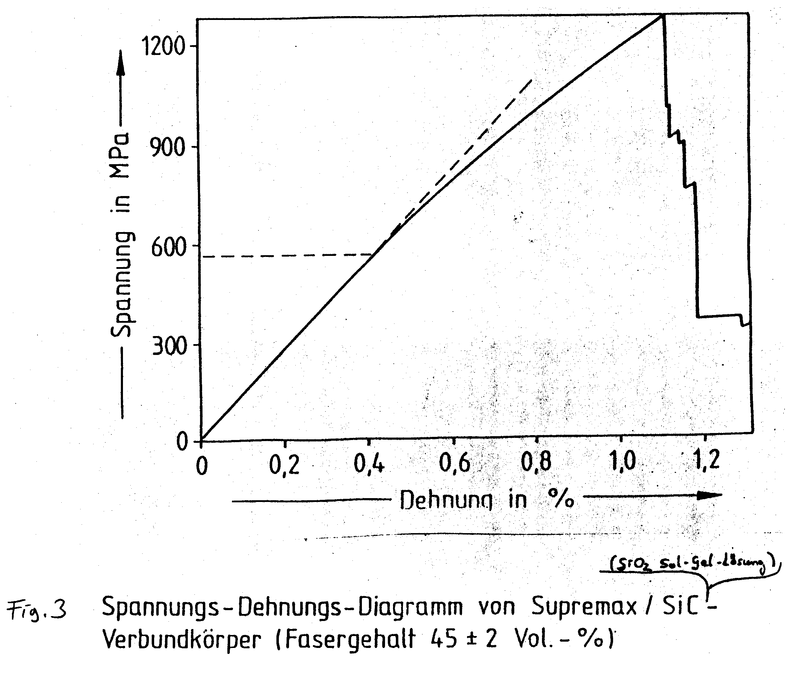

Eine typische Spannungs-Dehnungs-Kurve für Beispiel 13 zeigt Figur 3. Hier ist der für faserverstärkte Gläser charakteristische Verlauf zu erkennen, der zunächst durch eine lineare Abhängigkeit und dann durch eine langsam abnehmende Steigung bis zur Maximalspannung gekennzeichnet ist. Bei der Maximalspannung brechen die ersten Fasern. Da jedoch nicht alle Fasern gleichzeitig brechen, zeigt das Spannungs-Dehnungs-Diagramm eine Art plastisches Verhalten für noch höhere Dehnungen.

In Beispiel 14 wird das Erdalkalialumosilikatglas mit der Typennummer 8252 als Matrixmaterial verwendet. Dieses Glas hat gegenüber SUPREMAX einen etwas größeren Ausdehnungskoeffizienten ($\alpha$ = 4,5 x $10^{-6}$/K) und etwa die gleiche Transformationstemperatur ($T_g$ = 717°C). Das Glas sollte daher noch stärker auf die Fasern aufschrumpfen als SUPREMAX. Die Ergebnisse für Beispiel 14 zeigen, daß gegenüber dem SiC-faserverstärkten SUPREMAX keine weitere Steigerung der Biegebruchfestigkeit erzielt werden kann. Die Ursache hierfür ist nach derzeitigem Verständnis sowohl in dem Ersatz des $P_2O_5$ durch das $B_2O_3$ als auch in der zu großen Differenz der Ausdehnungskoeffizienten zu suchen. Die mittleren Festigkeitswerte von 752 MPa sind trotzdem sehr hoch und unterstreichen damit, daß das Verfahren eine hohe Flexibilität in der Wahl der Matrixgläser zuläßt.

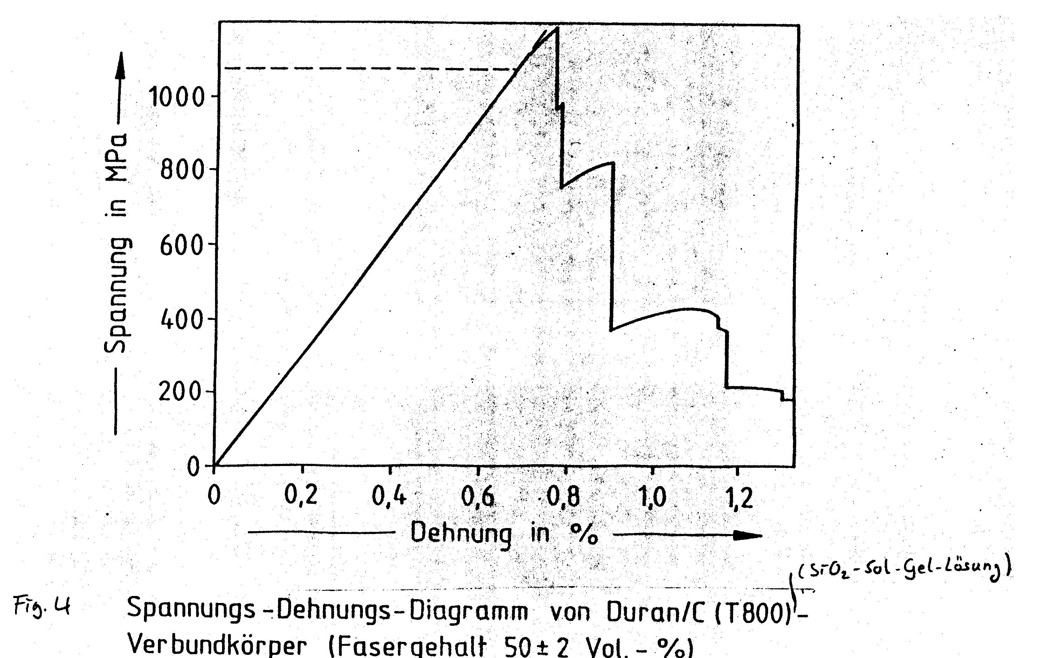

Die Beispiele 15 bis 22 geben die Resultate für C-faserverstärkte Gläser wieder. Bei Verwendung von DURAN als Matrixmaterial ergeben sich deutlich höhere Biegebruchfestigkeitswerte und Bruchzähigkeitswerte als für SiC-faserverstärktes DURAN. Mit ansteigendem Faservolumen werden in den Beispielen 15 bis 17 mittlere Festigkeitswerte von 774 MPa (30% Faservolumen), 1129 MPa (35%) und 1210 MPa (42%) beobachtet. Die zugehörigen mittleren Bruchzähigkeitswerte liegen bei 20 MPa x $\sqrt{m}$, 25 MPa x $\sqrt{m}$ und 28 MPa x $\sqrt{m}$. Wie im Falle des SiC-faserverstärkten DURAN's führt die Erhöhung des Faservolumenanteils auf 50% in Beispiel 18 auch beim C-faserverstärkten DURAN zu keiner weiteren Steigerung der Biegebruchfestigkeit. Nach derzeitigem Verständnis ist dieses Verhalten auf den speziellen Wickelprozeß zurückzuführen. Die Erhöhung des Faservolumenanteils bringt demgegenüber eine deutliche Steigerung in der Bruchzähigkeit auf mittlere Werte von 35 MPa x $\sqrt{m}$. Der Übergang von der C-Faser T 800 (Beispiel 17) zu T 1000 (Beispiel 19) führt noch einmal zu einer leichten Festigkeits- und Bruchzähigkeitssteigerung. Eine charakteristische Spannungs-Dehnungs-Kurve zu Beispiel 18 zeigt Figur 4.

Verbundwerkstoffe aus C-faserverstärktem SUPREMAX zeichnen sich bezüglich der obengenannten mechanischen Eigenschaften durch niedrigere Werte aus, Beispiel 20, als die SiC-faserverstärkten Verbundwerkstoffe, Beispiel 12. Verwendet man dagegen das $B_2O_3$-haltige Erdalkalialumosilikatglas mit der Typennummer 8252 als Matrixwerkstoff, so ergeben sich für die C-faserverstärkten Verbundwerkstoffe deutliche Eigenschaftsverbesserungen gegenüber den SiC-faserverstärkten Verbundwerkstoffen, wenn die C-Faser T 1000 verwendet wird. Im Beispiel 22 wurden mittlere Festigkeitswerte von 1148 ± 71 MPa erzielt.

Die Beispiele 23 bis 27 zeigen die Ergebnisse für SiC-faserverstärkte Glaskeramiken. Dabei wurden als Matrixmaterialien nur Ausgangsgläser zu Cordierit-Glaskeramiken verwendet. Beispiel 24 zeigt, daß die Herstellung von SiC-faserverstärkten Cordierit-Glaskeramiken einige Schwierigkeiten bereitet. Die mittleren Festigkeiten von 333 MPa liegen zwar deutlich höher als für die reinen Cordierit-Glaskeramiken (ca. 100 MPa), doch liegen die Werte deutlich unter denen der vorher besprochenen faserverstärkten Gläser. Eine der Ursachen für die relativ niedrigen Festigkeitswerte liegt in der Verwendung des Vier-Punkt-Biegeverfahrens für die Bestimmung der Biegebruchfestigkeiten, da erfahrungsgemäß Vier-Punkt-Biegebruchfestigkeiten niedriger liegen als Drei-Punkt-Biegebruchfestigkeiten. Darüber hinaus zeigt es sich, daß sich durch eine genauere Kontrolle der Prozeßparameter weitere Eigenschaftsverbesserungen erzielen lassen. Dies wird durch Beispiel 23 deutlich, wo bei einem Faservolumenanteil von 27% mittlere Biegebruchfestigkeiten von 656 MPa erzielt wurden. Ebenso wurden dann bei einem Faservolumenanteil von 51% und bei Erhöhung des Preßdrucks von 5 MPa auf 10 MPa mittlere Festigkeitswerte von 751 MPa erreicht, Beispiel 25. Dies sind für einen faserverstärkten stöchiometrischen Cordierit ausgezeichnete Werte. Ebenso stellt die mittlere Bruchzähigkeit von 19 MPa x $\sqrt{m}$ in Beispiel 24 eine überragende Eigenschaftsverbesserung gegenüber dem monolithischen Material dar.

Beispiel 26 zeigt, daß bei einer Zugabe von 3 Gew.-% BaO zu stöchiometischem Cordierit und einem Faservolumenanteil von 34% mittlere Festigkeiten von 803 MPa und mittlere Bruchzähgikeiten von 24 MPa x $\sqrt{m}$ erzielt wurden. Damit liegen die obengenannten Cordierit-Komposite deutlich über dem derzeit bekannten Stand der Technik.

Schließlich wurde in Beispiel 27 das stöchiometrische Cordierit durch 3,5 Gew.-% $TiO_2$ modifiziert. Bei einer $TiO_2$-haltigen Matrix ist zu erwarten, daß es zu einer chemischen Reaktion zwischen der SiC-Faser und dem $TiO_2$ in der Matrix kommt, wie in US-PS 4,485,179 beschrieben wurde. Dieser Effekt zeigt sich insbesondere auch bei der Verwendung einer $TiO_2$-haltigen Sol-Gel-Lösung bei der Herstellung eines SiC-faserverstärkten DURAN-Glases, wie Beispiel 8 deutlich belegt. Die Festigkeitswerte sinken in diesem Beispiel aufgrund der reaktiven Sol-Gel-Schicht auf Werte ab, die im Bereich der reinen Matrix liegen. Nach dem beanspruchten Verfahren ist dagegen im Falle des Beispiels 27 zu erwarten, daß die Ummantelung eines jeden Matrixkornes sowie der SiC-Fasern zunächst mit der $TiO_2$-freien Sol-Gel-Lösungsschicht und nach der Polykondensation mit der $SiO_2$-Schicht diese Reaktion verhindert. Dieses wird durch das Beispiel bestätigt. Die erzielten mittleren Festigkeiten in Beispiel 27 liegen bei 400 MPa und deuten somit nicht auf eine Degradation der Faser hin. Daß in diesem Beispiel nicht die Festigkeiten wie zum Beispiel in Beispiel 23 erhalten wurden, kann mehrere Ursachen haben:

a) die erzielten Werte stammen noch aus der Arbeitsphase, in der die Prozeßparameter nicht genügend genau kontrolliert wurden;

b) es wurden nur wenige Versuche ohne Optimierung der Prozeßparameter Temperatur, Zeit und Druck durchgeführt und

c) es ist zu erwarten, daß das $TiO_2$ das Kristallisationsverhalten und damit das Verdichtungsverhalten des Glases GM 30870 verändert.

## Tabelle 1 Werkstoffkombination und Ihre Eigenschaften

| Beispiel<br>Komposit-Daten | 1 | 2 | 3 | 4 | 5 | 6 | 7 | 8 | 9 |
|---|---|---|---|---|---|---|---|---|---|
| Matrix-Material | DURAN | DURAN | DURAN | DURAN | DURAN | DURAN | DURAN | DURAN | DURAN |
| Fasertyp | SiC | SiC | SiC | SiC | SiC | SiC | SiC | SiC | SiC |
| Sol-Gel-Lösung | $SiO_2$ | $SiO_2$ | $SiO_2$ | $SiO_2$ | $SiO_2$ | keine | DURAN | $TiO_2$ | $SiO_2$ |
| Faservolumenanteil in % | 42 | 42 | 42 | 48 | 54 | 42 | 40 | 42 | 40 |
| Preßtemperatur in °C | 1200 | 1200 | 1265 | 1250 | 1260 | 1270 | 1255 | 1270 | 1260 |
| Preßzeit in min | 5 | 5 | 5 | 5 | 5 | 5 | 5 | 5 | 5 |
| Preßdruck in MPa | 10 | 10 | 10 | 10 | 10 | 10 | 10 | 10 | 10 |
| Prüftemperatur in °C | 20 | 600 | 20 | 20 | 20 | 20 | 20 | 20 | 20 |
| Biegebruchfestigkeit in MPa | $743\pm42$ | $764\pm11$ | $752\pm81$ | $840\pm81$ | $749\pm35$ | $676\pm127$ | $772\pm72$ | $104\pm71$ | $519\pm74$ |
| Bruchzähigkeit in MPa $\sqrt{m}$ | | | $20\pm1$ | $18\pm2$ | $25\pm2$ | | | | |
| Bemerkung | 4-Punkt-Biegefestigkeit | | | | | *) | | **) | bidirektonale Verstärkung |

\*) Verfahren nach Stand der Technik
\*\*) nicht im Bereich der Patentanmeldung

EP 0 308 742 B1

**Tabelle 1 Werkstoffkombination und Ihre Eigenschaften 1.** Fortsetzung

| Beispiel<br>Komposit-Daten | 10 | 11 | 12 | 13 | 14 | 15 | 16 | 17 | 18 |
|---|---|---|---|---|---|---|---|---|---|
| Matrix-Material | SUPREMAX | SUPREMAX | SUPREMAX | SUPREMAX | 8252 | DURAN | DURAN | DURAN | DURAN |
| Fasertyp | SiC | SiC | SiC | SiC | SiC | C/T800 | C/T800 | C/T800 | C/T800 |
| Sol-Gel-Lösung | $SiO_2$ | $SiO_2$ | $SiO_2$ | $SiO_2$ | $SiO_2$ | $SiO_2$ | $SiO_2$ | $SiO_2$ | $SiO_2$ |
| Faservolumenanteil in % | 37 | 36 | 41 | 45 | 40 | 30 | 35 | 42 | 50 |
| Preßtemperatur in °C | 1250 | 1235 | 1200 | 1175 | 1260 | 1250 | 1250 | 1240 | 1250 |
| Preßzeit in min | 5 | 5 | 5 | 5 | 5 | 5 | 5 | 5 | 5 |
| Preßdruck in MPa | 5 | 10 | 10 | 10 | 10 | 8 | 10 | 10 | 10 |
| Prüftemperatur in °C | 20 | 20 | 20 | 20 | 20 | 20 | 20 | 20 | 20 |
| Biegebruchfestigkeit in MPa | 655±32 | 845±27 | 950±41 | 1222±74 | 752±50 | 774±140 | 1129±161 | 1210±62 | 1164±92 |
| Bruchzähigkeit in MPa m | | 26±5 | 26±4 | 36±7 | | 20±3 | 25±6 | 28±3 | 35±4 |
| Bemerkung | 4-Punkte Biegefestigkeit | | | | | | | | |

Tabelle 1 Werkstoffkombination und Ihre Eigenschaften (2. Fortsetzung)

| Beispiel | 19 | 20 | 21 | 22 | 23 | 24 | 25 | 26 | 27 |
|---|---|---|---|---|---|---|---|---|---|
| Komposit-Daten | | | | | | | | | |
| Matrix-Material | DURAN | SUPREMAX | 8252 | 8252 | GM30870 | GM30870 | GM30870 | GM30870 +3Gew.%BaO | GM30870 +3,5Gew.%TiO |
| Fasertyp | C/T1000 | C/T1000 | C/T800 | C/T1000 | SiC | SiC | SiC | SiC | SiC |
| Sol-Gel-Lösung | $SiO_2$ | $SiO_2$ | $SiO_2$ | $SiO_2$ | $SiO_2$ | $SiO_2$ | $SiO_2$ | $SiO_2$ | $SiO_2$ |
| Faservolumenanteil in % | 42 | 42 | 42 | 42 | 27 | 51 | 51 | 34 | 22 |
| Preßtemperatur in °C | 1240 | 1190 | 1210 | 1215 | 1300 | 1310 | 1310 | 1315 | 1350 |
| Preßzeit in min | 5 | 5 | 5 | 5 | 5 | 5 | 5 | 5 | 5 |
| Preßdruck in MPa | 10 | 10 | 10 | 10 | 2 | 5 | 10 | 10 | 5 |
| Prüftemperatur in °C | 20 | 20 | 20 | 20 | 20 | 20 | 20 | 20 | 20 |
| Biegebruchfestigkeit in MPa | 1287±41 | 810±46 | 768±81 | 1148±71 | 656±122 | 333±29 | 751±60 | 803±51 | 400 |
| Bruchzähigkeit in MPa·m | 30±6 | 22±5 | 19+6 | 19+6 | | 19 | | 24 | |
| Bemerkung | Vier-Punkt-Biegefestigkeit | | | | | | | | |

## Patentansprüche

1. Faserverstärkter Verbundwerkstoff aus Glas und/oder Glaskeramik einerseits und anorganischen Fasern andererseits, bei welchem die Fasern in einer gesinterten Matrix aus Glas und/oder Glaskeramik

15

eingebettet und an die Matrix gebunden sind, bei dem sowohl die Fasern als auch das Matrixmaterial von einer durch thermische Hydrolyse und Polykondensation mindestens eines Metallalkoxids erhaltenen Schicht ummantelt sind.

2. Faserverstärkter Verbundwerkstoff nach Anspruch 1, dadurch gekennzeichnet, daß die anorganischen Fasern aus der Gruppe von SiC-, $Si_3N_4$-, $Al_2O_3$-, $ZrO_2$-, $SiO_2$-, Mullit- und C-Fasern sowie Kombinationen davon, gewählt sind.

3. Faserverstärkter Verbundwerkstoff nach Anspruch 2, dadurch gekennzeichnet, daß die in Anspruch 2 aufgeführten anorganischen Fasern mindestens ein Element aus der Gruppe von Si, Ti, Zr, Al, C, O und N als zusätzlichen Bestandteil enthalten.

4. Faserverstärkter Verbundwerkstoff nach einem der Ansprüche 1 bis 3, dadurch gekennzeichnet, daß die Metallalkoxide aus der Gruppe von Alkoxiden der Elemente aus der ersten bis vierten Hauptgruppe und der vierten und fünften Nebengruppe, insbesondere der Elemente Na, K, Mg, Ca, Ba, Al, Si, Ti, Zr, Nb, Hf und Ta sowie Kombinationen der vorgenannten Alkoxide, gewählt sind.

5. Fraserverstärkter Verbundwerkstoff nach einem der Ansprüche 1 bis 4, dadurch gekennzeichnet, daß die Metallalkoxide Mischungen aus mindestens einem Kieselsäureester und einem oder mehreren Alkoxiden der in Anspruch 4 aufgeführten Elemente sind.

6. Faserverstärkter Verbundwerkstoff nach einem der Ansprüche 1 bis 4, dadurch gekennzeichnet, daß das Metallalkoxid mindestens ein Kieselsäureester ist.

7. Faserverstärkter Verbundwerkstoff nach einem der Ansprüche 1-6, dadurch gekennzeichnet, daß die Gläser ausgewählt sind aus der Gruppe von Borosilikatglas, Erdalkalialumosilikatglas, $B_2O_3$-haltiges Erdalkalialumosilikatglas, $P_2O_5$-haltiges Erdalkalialumosilikatglas sowie Kombination der vorgenannten Gläser.

8. Faserverstärkter Verbundwerkstoff nach Anspruch 7, dadurch gekennzeichnet, daß das Pulver ein Pulver eines Borosilikatglases mit den physikalischen Eigenschaften

| | |
|---|---|
| Dichte | $= 2,23 \ g/cm^3$ |
| Ausdehnungskoeffizienten $\alpha_{20\text{-}300}$ | $= 3,25 \times 10^{-6}/K$ |
| E-Modul | $= 63 \ kN/mm^2$ |
| Dielektrizitätskonstante bei 1 MHz | $= 4,7$ |
| Verlustwinkel $\tan \delta$ bei 1 MHz | $= 55 \times 10^{-4}$ |
| Transformationstemperatur $T_g$ | $= 530 \,°C$ |
| Verarbeitungstemperatur bei $10^4$ dPa.s | $= 1270 \,°C$ |

ist.

9. Faserverstärkter Verbundwerkstoff nach Anspruch 7, dadurch gekennzeichnet, daß das Pulver ein Pulver eines $P_2O_5$-haltigen Erdalkalialumosilikatglases mit den physikalischen Eigenschaften

| | |
|---|---|
| Dichte | $= 2,56 \ g/cm^3$ |
| Ausdehnungskoeffizient $\alpha_{20\text{-}300}$ | $= 4,1 \times 10^{-6}/K$ |
| E-Modul | $= 90 \ kN/mm^2$ |
| Dielektrizitätskonstante bei 1 MHz | $= 6,1$ |
| Verlustwinkel $\tan \delta$ bei 1 MHz | $= 23 \times 10^{-4}$ |
| Transformationstemperatur $T_g$ | $= 730 \,°C$ |
| Verarbeitungstemperatur bei $10^4$ dPa.s | $= 1235 \,°C$ |

ist.

10. Faserverstärkter Verbundwerkstoff nach einem der Ansprüche 1-6, dadurch gekennzeichnet, daß das

16

EP 0 308 742 B1

Pulver ein Pulver von mindestens einem Ausgangsglas von Glaskeramiken ist.

11. Faserverstärkter Verbundwerkstoff nach Anspruch 10, dadurch gekennzeichnet, daß das Pulver ein Pulver von mindestens einem Ausgangsglas für cordierit-haltige Glaskeramiken ist.

12. Faserverstärkter Verbundwerkstoff nach einem der vorstehenden Ansprüche, dadurch gekennzeichnet, daß er einen Faservolumenanteil von bis zu 65% enthält.

13. Faserverstärkter Verbundwerkstoff nach Anspruch 1, dadurch gekennzeichnet, daß er als Matrixmaterial ein Borosilikatglas mit den physikalischen Eigenschaften

| | |
|---|---|
| Dichte | $= 2{,}23$ g/cm$^3$ |
| Ausdehnungskoeffizienten $\alpha_{20\text{-}300}$ | $= 3{,}25 \times 10^{-6}$/K |
| E-Modul | $= 63$ kN/mm$^2$ |
| Dielektrizitätskonstante bei 1 MHz | $= 4{,}7$ |
| Verlustwinkel tan $\delta$ bei 1 MHz | $= 55 \times 10^{-4}$ |
| Transformationstemperatur $T_g$ | $= 530\,°C$ |
| Verarbeitungstemperatur bei $10^4$ dPa.s | $= 1270\,°C$ |

und einen Anteil von 42 bis 54 Vol.-% an SiC-Fasern enthält, wobei sowohl das Matrixmaterial als auch die Fasern von einer durch thermische Hydrolyse und Polykondensation mindestens eines Kieselsäureesters erhaltenen Bindemittelschicht ummantelt sind, und daß er Biegebruchfestigkeiten zwischen 671 und 921 MPa und Bruchzähigkeiten zwischen 16 und 27 MPa x $\sqrt{m}$ aufweist.

14. Faserverstärkter Verbundwerkstoff nach Anspruch 1, dadurch gekennzeichnet, daß er als Matrixmaterial ein P$_2$O$_5$-haltiges Erdalkalialumosilikatglas mit den physikalischen Eigenschaften

| | |
|---|---|
| Dichte | $= 2{,}56$ g/cm$^3$ |
| Ausdehnungskoeffizient $\alpha_{20\text{-}300}$ | $= 4{,}1 \times 10^{-6}$/K |
| E-Modul | $= 90$ kN/mm$^2$ |
| Dielektrizitätskonstante bei 1 MHz | $= 6{,}1$ |
| Verlustwinkel tan $\delta$ bei 1 MHz | $= 23 \times 10^{-4}$ |
| Transformationstemperatur $T_g$ | $= 730\,°C$ |
| Verarbeitungstemperatur bei $10^4$ dPa.s | $= 1235\,°C$ |

und einen Anteil von 45 Vol.-% an SiC-Fasern enthält, wobei sowohl das Matrixmaterial als auch die Fasern von einer durch thermische Hydrolyse und Polykondensation mindestens eines Kieselsäureesters erhaltenen Bindemittelschicht ummantelt sind, und daß er eine mittlere Biegebruchfestigkeit von > 1200 MPa und eine Bruchzähigkeit von bis zu 43 MPa x $\sqrt{m}$ aufweist.

15. Faserverstärkter Verbundwerkstoff nach Anspruch 1, dadurch gekennzeichnet, daß er als Matrixmaterial ein Borosilikatglas mit den physikalischen Eigenschaften

| | |
|---|---|
| Dichte | $= 2{,}23$ g/cm$^3$ |
| Ausdehnungskoeffizienten $\alpha_{20\text{-}300}$ | $= 3{,}25 \times 10^{-6}$/K |
| E-Modul | $= 63$ kN/mm$^2$ |
| Dielektrizitätskonstante bei 1 MHz | $= 4{,}7$ |
| Verlustwinkel tan $\delta$ bei 1 MHz | $= 55 \times 10^{-4}$ |
| Transformationstemperatur $T_g$ | $= 530\,°C$ |
| Verarbeitungstemperatur bei $10^4$ dPa.s | $= 1270\,°C$ |

und einen Anteil von 30 bis 50 Vol.-% C-Fasern enthält, wobei sowohl das Matrixmaterial als auch die Fasern von einer durch thermische Hydrolyse und Polykondensation mindestens eines Kieselsäureesters erhaltenen Bindemittelschicht ummantelt sind, und daß er Biegebruchfestigkeiten zwischen 634 und 1328 MPa und eine Bruchzähigkeit zwischen 17 und 39 MPa x $\sqrt{m}$ aufweist.

17

**16.** Faserverstärkter Verbundwerkstoff nach Anspruch 1, dadurch gekennzeichnet, daß er als Matrixmaterial ein $B_2O_3$-haltiges Erdalkalialumosilikatglas und einen Anteil von 42 Vol.-% C-Fasern, welche eine Zugfestigkeit bis 7000 MPa und ein E-Modul von ca. 300 GPa aufweisen, enthält, wobei sowohl das Matrixmaterial als auch die Fasern von einer durch thermische Hydrolyse und Polykondensation mindestens eines Kieselsäureesters erhaltenen Bindemittelschicht ummantelt sind, und daß er Biegebruchfestigkeiten von im Mittel 1200 MPa und Bruchzähigkeiten von im Mittel 19 MPa x $\sqrt{m}$ aufweist.

**17.** Verfahren zur Herstellung von faserverstärkten Verbundwerkstoffen aus Glas und Glaskeramik oder Mischungen davon einerseits und anorganischen Fasern andererseits, bei dem die anorganischen Fasern kontinuierlich durch eine Suspension eines sinterfähigen Pulvers aus Glas-, Glaskeramik- oder Cordierit oder Mischungen dieser Pulver in einem Wirbelbett gezogen und die mit der Suspension behafteten Fasern in Schichten übereinander zu einem Prepreg aufgewickelt, getrocknet und heißverpreßt werden, dadurch gekennzeichnet, daß eine Suspension verwendet wird, die eine bereits Hydrolyseprodukte sowie deren Polykondensationsprodukte aufweisende Lösung mindestens eines Metallalkoxids enthält und das Prepreg vor dem Heißverpressen zur Hydrolyse der Metallalkoxide einer Konditionierung unterworfen und die Hydrolyseprodukte polykondensiert werden.

**18.** Verfahren nach Anspruch 17, dadurch gekennzeichnet, daß als anorganische Fasern Fasern aus der Gruppe von SiC-, $Si_3N_4$-,$Al_2O_3$-, $ZrO_2$-, $SiO_2$-, Mullit-, C-Fasern sowie Kombinationen aus den vorgenannten Fasern, verwendet werden.

**19.** Verfahren nach Anspruch 18, dadurch gekennzeichnet, daß die anorganischen Fasern mindestens ein Element aus der Gruppe von Si, Ti, Zr, Al, C, O und N als zusätzlichen Bestandteil enthalten.

**20.** Verfahren nach einem der Ansprüche 17 bis 19, dadurch gekennzeichnet, daß als Metallalkoxide einzeln oder in Kombination die Alkoxide der Elemente aus der ersten bis vierten Hauptgruppe und der vierten und fünften Nebengruppe, insbesondere der Elemente Na, K, Mg, Ca, Ba, Al, Si, Ti, Zr, Hf, Nb und Ta verwendet werden.

**21.** Verfahren nach Anspruch 17 bis 20, dadurch gekennzeichnet, daß als Metallalkoxide Mischungen aus mindestens einem Kieselsäureester und einem oder mehreren Alkoxiden der in Anspruch 20 aufgeführten Elemente verwendet werden.

**22.** Verfahren nach einem der Ansprüche 17 bis 20, dadurch gekennzeichnet, daß als Metallalkoxid mindestens ein Kieselsäureester verwendet wird.

**23.** Verfahren nach einem der Ansprüche 17 bis 22, dadurch gekennzeichnet, daß als Lösungsmittel für die bereits Hydrolyseprodukte sowie deren Polykondensationsprodukte aufweisende Lösung mindestens eines Metallalkoxides eine wäßrige Säure verwendet wird.

**24.** Verfahren nach Anspruch 23, dadurch gekennzeichnet, daß als wäßrige Säure ein Gemisch aus destilliertem Wasser und konzentrierter Essigsäure im Verhältnis 1 : 1 - 10 : 1 verwendet wird.

**25.** Verfahren nach einem der Ansprüche 23 oder 24, dadurch gekennzeichnet, daß der sauren Lösung des Metallalkoxides zur Steuerung des Verdünnungsgrades mindestens ein weiteres Lösungsmittel zugesetzt wird.

**26.** Verfahren nach Anspruch 25, dadurch gekennzeichnet, daß dieses weitere Lösungsmittel ausgewählt wird aus der Gruppe von Methanol, Ethanol, n-Propanol, i-Propanol, n-Butanol, Aceton, Methylethylketon, Essigsäuremethylester, Essigsäureethylester, Essigsäurebutylester.

**27.** Verfahren nach Anspruch 17-26, dadurch gekennzeichnet, daß als Pulver aus einem Glas, ausgewählt aus der Gruppe von Borosilikatglas, Erdalkalialumosilikatglas, $B_2O_3$-haltiges Erdalkalialumosilikatglas, $P_2O_5$-haltiges Erdalkalialumosilikatglas sowie Kombinationen der vorgenannten Gläser, verwendet wird.

**28.** Verfahren nach Anspruch 17-26, dadurch gekennzeichnet, daß ein Pulver aus mindestens einem Ausgangsglas von Glaskeramiken verwendet wird.

EP 0 308 742 B1

29. Verfahren nach Anspruch 28, dadurch gekennzeichnet, daß ein Pulver aus mindestens einem Ausgangsglas für Cordierit-haltige Glaskeramiken verwendet wird.

30. Verfahren nach einem der Ansprüche 17 bis 29, dadurch gekennzeichnet, daß das sinterfähige Pulver in einer solchen Menge in die Lösung eingebracht wird, daß das Gewichtsverhältnis von sinterfähigem Pulver und Lösung im Bereich von 1 : 5 - 1 : 1 liegt.

31. Verfahren nach einem der Ansprüche 17 bis 30, dadurch gekennzeichnet, daß das Heißverpressen bei Temperaturen von 1000 bis 1600°C und Drücken von 2 bis 20 MPa erfolgt.

32. Verfahren nach einem der Ansprüche 17 bis 31, dadurch gekennzeichnet, daß das Heißverpressen in einer Inertgasatmosphäre oder im Vakuum durchgeführt wird.

33. Verfahren nach einem der Ansprüche 28 oder 29, dadurch gekennzeichnet, daß gleichzeitig mit dem Heißverpressen die Keramisierung (Umwandlung) des Ausgangsglases durchgeführt wird.

34. Verfahren nach einem der Ansprüche 28 oder 29, dadurch gekennzeichnet, daß die Keramisierung des Ausgangsglases nach dem Heißverpressen durchgeführt wird.

## Claims

1. Fibre-reinforced composite material of glass and/or glass ceramics on the one hand and inorganic fibres on the other hand, in which the fibres are embedded in a sintered matrix of glass and/or glass ceramics and bonded to the matrix, wherein both the fibres and the matrix material are surrounded by a layer obtained by thermal hydrolysis and polycondensation of at least one metal alkoxide.

2. Fibre-reinforced composite material according to claim 1, characterised in that the inorganic fibres are selected from the group of SiC, $Si_3N_4$, $Al_2O_3$, $ZrO_2$, $SiO_2$, mullite and C fibres and combinations thereof.

3. Fibre-reinforced composite material according to claim 2, characterised in that the inorganic fibres listed in claim 2 contain at least one element from the group of Si, Ti, Zr, Al, C, O and N as an additional component.

4. Fibre-reinforced composite material according to one of claims 1 to 3, characterised in that the metal alkoxides are selected from the group of alkoxides of the elements from the first to the fourth main group and the fourth and fifth auxiliary groups, particularly the elements Na, K, Mg, Ca, Ba, Al, Si, Ti, Zr, Nb, Hf and Ta and combinations of the above alkoxides.

5. Fibre-reinforced composite material according to one of claims 1 to 4, characterised in that the metal alkoxides are mixtures of at least one silicic acid ester and one or more alkoxides of the elements listed in claim 4.

6. Fibre-reinforced composite material according to one of claims 1 to 4, characterised in that the metal alkoxide is at least one silicic acid ester.

7. Fibre-reinforced composite material according to one of claims 1 - 6, characterised in that the glasses are selected from the group of borosilicate glass, alkaline-earth aluminosilicate glass, $B_2O_3$-containing alkaline-earth aluminosilicate glass, $P_2O_5$-containing alkaline-earth aluminosilicate glass and combinations of the above glasses.

8. Fibre-reinforced composite material according to claim 7, characterised in that the powder is a powder of a borosilicate glass with the physical properties

| density | = 2.23 g/cm$^3$ |
|---|---|
| expansion coefficient $\alpha_{20\text{-}300}$ | = 3.25 x 10$^{-6}$/K |
| elastic modulus | = 63 kN/mm$^2$ |
| dielectric constant at 1 MHz | = 4.7 |
| loss angle tan $\delta$ at 1 MHz | = 55 x 10$^{-4}$ |
| glass transition temperature T$_g$ | = 530 °C |
| processing temperature at 10$^4$ dPa.s | = 1270 °C. |

9. Fibre-reinforced composite material according to claim 7, characterised in that the powder is a powder of a P$_2$O$_5$-containing alkaline-earth aluminosilicate glass with the physical properties

| density | = 2.56 g/cm$^3$ |
|---|---|
| expansion coefficient $\alpha_{20\text{-}300}$ | = 4.1 x 10$^{-6}$/K |
| elastic modulus | = 90 kN/mm$^2$ |
| dielectric constant at 1 MHz | = 6.1 |
| loss angle tan $\delta$ at 1 MHz | = 23 x 10$^{-4}$ |
| glass transition temperature T$_g$ | = 730 °C |
| processing temperature at 10$^4$ dPa.s | = 1235 °C. |

10. Fibre-reinforced composite material according to one of claims 1 - 6, characterised in that the powder is a powder of at least one starting glass of glass ceramics.

11. Fibre-reinforced composite material according to claim 10, characterised in that the powder is a powder of at least one starting glass for cordierite-containing glass ceramics.

12. Fibre-reinforced composite material according to one of the above claims, characterised in that it contains a proportion of fibres by volume of up to 65 %.

13. Fibre-reinforced composite material according to claim 1, characterised in that it contains a borosilicate glass with the physical properties

| density | = 2.23 g/cm$^3$ |
|---|---|
| expansion coefficient $\alpha_{20\text{-}300}$ | = 3.25 x 10$^{-6}$/K |
| elastic modulus | = 63 kN/mm$^2$ |
| dielectric constant at 1 MHz | = 4.7 |
| loss angle tan $\delta$ at 1 MHz | = 55 x 10$^{-4}$ |
| glass transition temperature T$_g$ | = 530 °C |
| processing temperature at 10$^4$ dPa.s | = 1270 °C |

as the matrix material and a proportion of 42 to 54 % v/v of SiC fibres, whereby both the matrix material and the fibres are surrounded by a binder layer obtained by thermal hydrolysis and polycondensation of at least one silicic acid ester, and that it exhibits transverse rupture strengths of between 671 and 921 MPa and fracture toughnesses of between 16 and 27 MPa x $\sqrt{m}$.

14. Fibre-reinforced composite material according to claim 1, characterised in that it contains a P$_2$O$_5$-containing alkaline-earth aluminosilicate glass with the physical properties

| density | = 2.56 g/cm$^3$ |
|---|---|
| expansion coefficient $\alpha_{20\text{-}300}$ | = 4.1 x 10$^{-6}$/K |
| elastic modulus | = 90 kN/mm$^2$ |
| dielectric constant at 1 MHz | = 6.1 |
| loss angle tan $\delta$ at 1 MHz | = 23 x 10$^{-4}$ |
| glass transition temperature T$_g$ | = 730 $^\circ$C |
| processing temperature at 10$^4$ dPa.s | = 1235 $^\circ$C |

as the matrix material and a proportion of 45 % v/v of Sic fibres, whereby both the matrix material and the fibres are surrounded by a binder layer obtained by thermal hydrolysis and polycondensation of at least one silicic acid ester, and that it exhibits an average transverse rupture strength of > 1200 MPa and a fracture toughness of up to 43 MPa x $\sqrt{m}$.

15. Fibre-reinforced composite material according to claim 1, characterised in that it contains a borosilicate glass with the physical properties

| density | = 2.23 g/cm$^3$ |
|---|---|
| expansion coefficient $\alpha_{20\text{-}300}$ | = 3.25 x 10$^{-6}$/K |
| elastic modulus | = 63 kN/mm$^2$ |
| dielectric constant at 1 MHz | = 4.7 |
| loss angle tan $\delta$ at 1 MHz | = 55 x 10$^{-4}$ |
| glass transition temperature T$_g$ | = 530 $^\circ$C |
| processing temperature at 10$^4$ dPa.s | = 1270 $^\circ$C |

as the matrix material and a proportion of 30 to 50 % v/v of C fibres, whereby both the matrix material and the fibres are surrounded by a binder layer obtained by thermal hydrolysis and polycondensation of at least one silicic acid ester, and that it exhibits transverse rupture strengths of between 634 and 1328 MPa and a fracture toughness of between 17 and 39 MPa x $\sqrt{m}$.

16. Fibre-reinforced composite material according to claim 1, characterised in that it contains a $B_2O_3$-containing alkaline-earth aluminosilicate glass as the matrix material and a proportion of 42 % v/v of C fibres which exhibit a tensile strength of up to 7000 MPa and an elastic modulus of approximately 300 GPa, whereby both the matrix material and the fibres are surrounded by a binder layer obtained by thermal hydrolysis and polycondensation of at least one silicic acid ester, and that it exhibits transverse rupture strengths of on average 1200 MPa and fracture toughnesses of on average 19 MPa x $\sqrt{m}$.

17. Process for the production of fibre-reinforced composite materials of glass and glass ceramics or mixtures thereof on the one hand and inorganic fibres on the other hand, in which the inorganic fibres are drawn continuously through a suspension of a sinterable powder of glass, glass ceramics or cordierite or mixtures of these powders in a fluidised bed and the fibres coated with the suspension are wound up in layers one on top of the other to form a prepreg, dried and hot-pressed, characterised in that a suspension is used which contains a solution of at least one metal alkoxide which already exhibits hydrolysis products and their polycondensation products, and that, before hot-pressing, the prepreg is subjected to conditioning for the hydrolysis of the metal alkoxides and the hydrolysis products are polycondensed.

18. Process according to claim 17, characterised in that fibres from the group of SiC, $Si_3N_4$, $Al_2O_3$, $ZrO_2$, $SiO_2$, mullite and C fibres and combinations of the above fibres are used as the inorganic fibres.

19. Process according to claim 18, characterised in that the inorganic fibres contain at least one element from the group of Si, Ti, Zr, Al, C, O and N as an additional component.

20. Process according to one of claims 17 to 19, characterised in that the alkoxides of the elements from the first to the fourth main group and the fourth and fifth auxiliary groups, especially the elements Na, K, Mg, Ca, Ba, Al, Si, Ti, Zr, Hf, Nb and Ta, are used as the metal alkoxides, individually or in combination.

21. Process according to claims 17 to 20, characterised in that mixtures of at least one silicic acid ester and one or more alkoxides of the elements listed in claim 20 are used as the metal alkoxides.

22. Process according to one of claims 17 to 20, characterised in that at least one silicic acid ester is used as the metal alkoxide.

23. Process according to one of claims 17 to 22, characterised in that an aqueous acid is used as the solvent for the solution of at least one metal alkoxide already exhibiting hydrolysis products and their polycondensation products.

24. Process according to claim 23, characterised in that a mixture of distilled water and concentrated acetic acid in a ratio of 1 : 1 - 10 : 1 is used as the aqueous acid.

25. Process according to one of claims 23 or 24, characterised in that at least one additional solvent is added to the acidic solution of the metal alkoxide to control the degree of dilution.

26. Process according to claim 25, characterised in that this additional solvent is selected from the group of methanol, ethanol, n-propanol, i-propanol, n-butanol acetone, methyl ethyl ketone, ethyl acetate, ethyl acetate and butyl acetate.

27. Process according to claims 17-26, characterised in that as powder of a glass selected from the group of borosilicate glass, alkaline-earth aluminosilicate glass, $B_2O_3$-containing alkaline-earth aluminosilicate glass, $P_2O_5$-containing alkaline-earth aluminosilicate glass and combinations of the above glasses is used.

28. Process according to claims 17-26, characterised in that a powder of at least one starting glass of glass ceramics is used.

29. Process according to claim 28, characterised in that a powder of at least one starting glass for cordierite-containing glass ceramics is used.

30. Process according to one of claims 17 to 29, characterised in that the sinterable powder is introduced into the solution in a quantity such that the weight ratio of sinterable powder and solution is in the range from 1 : 5 - 1 : 1.

31. Process according to one of claims 17 to 30, characterised in that the hot-pressing takes place at temperatures of 1000 to 1600 °C and pressures of 2 to 20 MPa.

32. Process according to one of claims 17 to 31, characterised in that the hot-pressing is performed in an inert gas atmosphere or in a vacuum.

33. Process according to one of claims 28 or 29, characterised in that the ceramisation (transformation) is carried out at the same time as the hot-pressing.

34. Process according to one of claims 28 or 29, characterised in that the ceramisation of the starting glass is carried out after the hot-pressing.

**Revendications**

1. Matériau composite renforcé de fibres, à base de verre et/ou de vitro-céramique d'une part et de fibres minérales d'autre part, dans lequel les libres sont noyées dans une matrice frittée de verre et/ou de vitro-céramique et liées à cette matrice, et dans lequel tant les libres que le matériau de matrice sont enrobés d'une couche obtenue par hydrolyse thermique et polycondensation d'au moins un alcoxyde de métal.

2. Matériau composite renforcé de fibres selon la revendication 1, **caractérisé** en ce que les fibres minérales sont choisies dans le groupe constitué par des fibres de SiC, $Si_3N_4$, $Al_2O_3$, $ZrO_2$, $SiO_2$, mullite et carbone, ainsi que leurs combinaisons.

3. Matériau composite renforcé de fibres selon la revendication 2, **caractérisé** en ce que les fibres minérales indiquées dans la revendication 2 contiennent au moins un élément du groupe constitué par Si, Ti, Zr, Al, C, O et N, en tant que constituant supplémentaire.

4. Matériau composite renforcé de fibres selon l'une des revendications 1 à 3, **caractérisé** en ce que les alcoxydes de métal sont choisis dans le groupe des alcoxydes des éléments des groupes principaux A à IVA et des groupes secondaires IVB et VB, et en particulier des éléments Na, K, Mg, Ca, Ba, Al, Si, Ti, Zr, Nb, Hf et Ta, ainsi que des combinaisons des alcoxydes mentionnés.

5. Matériau composite renforcé de fibres selon l'une des revendications 1 à 4, **caractérisé** en ce que les alcoxydes de métal sont des mélanges d'au moins un ester d'acide silicique et d'un ou de plusieurs alcoxydes des éléments indiqués dans la revendication 4.

6. Matériau composite renforcé de fibres selon l'une des revendications 1 à 4, **caractérisé** en ce que l'alcoxyde de métal est au moins un ester d'acide silicique.

7. Matériau composite renforcé de fibres selon l'une des revendications 1 à 6, **caractérisé** en ce que les verres sont choisis dans le groupe constitué par les verres de borosilicate, les verres d'aluminosilicate alcalino-terreux, les verres d'aluminosilicate alcalino-terreux contenant du $B_2O_3$, les verres d'aluminosilicate alcalino-terreux contenant du $P_2O_5$, ainsi que les combinaisons des verres mentionnés ci-dessus.

8. Matériau composite renforcé de fibres selon la revendication 7, **caractérisé** en ce que la poudre est une poudre d'un verre de borosilicate présentant les propriétés physiques suivantes :

| | |
|---|---|
| Densité | 2,23 g/cm$^3$ |
| Coefficient de dilatation $\alpha_{20\text{-}300}$ | 3,25.10$^{-6}$/K |
| Module E | 63 kN/mm$^2$ |
| Constante diélectrique à 1 MHz | 4,7 |
| Angle de perte donné par tan $\delta$ à 1 MHz | 55.10$^{-4}$ |
| Température de transformation $T_v$ | 530°C |
| Température de travail à 10$^4$ dPa.s | 1270°C |

9. Matériau composite renforcé de fibres selon la revendication 7, **caractérisé** en ce que la poudre est une poudre d'un verre d'aluminosilicate alcalino-terreux contenant du $P_2O_5$ présentant les propriétés physiques suivantes :

| | |
|---|---|
| Densité | 2,56 g/cm$^3$ |
| Coefficient de dilatation $\alpha_{20\text{-}300}$ | 4,1.10$^{-6}$/K |
| Module E | 90 kN/mm$^2$ |
| Constante diélectrique à 1 MHz | 6,1 |
| Angle de perte donné par tan $\delta$ à 1 MHz | 23.10$^{-4}$ |
| Température de transformation $T_v$ | 730°C |
| Température de travail à 10$^4$ dPa.s | 1235°C |

10. Matériau composite renforcé de fibres selon l'une des revendications 1 à 6, **caractérisé** en ce que la poudre est une poudre d'au moins un verre de départ de vitro-céramiques.

11. Matériau composite renforcé de fibres selon la revendication 10, **caractérisé** en ce que la poudre est une poudre d'au moins un verre de départ pour vitro-céramiques contenant de la cordiérite.

12. Matériau composite renforcé de fibres selon l'une des revendications précédentes, **caractérisé** en ce qu'il contient des fibres en une fraction volumique valant jusqu'à 65 %.

13. Matériau composite renforcé de fibres selon la revendication 1, **caractérisé** en ce qu'il contient, en tant que matériau de matrice, un verre de borosilicate présentant les propriétés physiques suivantes :

| Densité | 2,23 g/cm$^3$ |
|---|---|
| Coefficient de dilatation $\alpha_{20\text{-}300}$ | 3,25.10$^{-6}$/K |
| Module E | 63 kN/mm$^2$ |
| Constante diélectrique à 1 MHz | 4,7 |
| Angle de perte donné par tan $\delta$ à 1 MHz | 55.10$^{-4}$ |
| Température de transformation T$_v$ | 530°C |
| Température de travail à 10$^4$ dPa.s | 1270°C |

et des fibres de SiC en une fraction volumique valant de 42 à 54 %, aussi bien le matériau de matrice que les fibres étant enrobés d'une couche de liant obtenue par hydrolyse thermique et polycondensation d'au moins un ester d'acide silicique, et en ce qu'il présente une résistance à la rupture par flexion valant entre 671 et 921 MPa et une ténacité à la rupture valant entre 16 et 27 MPa.m$^{1/2}$.

**14.** Matériau composite renforcé de fibres selon la revendication 1, **caractérisé** en ce qu'il contient, en tant que matériau de matrice, un verre d'aluminosilicate alcalino-terreux contenant du P$_2$O$_5$ et présentant les propriétés physiques suivantes :

| Densité | 2,56 g/cm$^3$ |
|---|---|
| Coefficient de dil tation $\alpha_{20\text{-}300}$ | 4,1.10$^{-6}$/K |
| Module E | 90 kN/mm$^2$ |
| Constante diélectrique à 1 MHz | 6,1 |
| Angle de perte donné par tan $\delta$ à 1 MHz | 23.10$^{-4}$ |
| Température de transformation T$_v$ | 730°C |
| Température de travail à 10$^4$ dPa.s | 1235°C |

et des fibres de SiC en une fraction volumique valant 45 %, aussi bien le matériau de matrice que les fibres étant enrobés d'une couche de liant obtenue par hydrolyse thermique et polycondensation d'au moins un ester d'acide silicique, et en ce qu'il présente une résistance moyenne à la rupture par flexion > 1200 MPa et une ténacité à la rupture valant jusqu'à 43 MPa.m$^{1/2}$.

**15.** Matériau composite renforcé de fibres selon la revendication 1, **caractérisé** en ce qu'il contient, en tant que matériau de matrice, un verre de borosilicate présentant les propriétés physiques suivantes :

| Densité | 2,23 g/cm$^3$ |
|---|---|
| Coefficient de dilatation $\alpha_{20\text{-}300}$ | 3,25.10$^{-6}$/K |
| Module E | 63 kN/mm$^2$ |
| Constante diélectrique à 1 MHz | 4,7 |
| Angle de perte donné par tan $\delta$ à 1 MHz | 55.10$^{-4}$ |
| Température de transformation T$_v$ | 530°C |
| Température de travail à 10$^4$ dPa.s | 1270°C |

et des fibres de SiC en une fraction volumique valant de 30 à 50 %, aussi bien le matériau de matrice que les fibres étant enrobés d'une couche de liant obtenue par hydrolyse thermique et polycondensation d'au moins un ester d'acide silicique, et en ce qu'il présente une résistance moyenne à la rupture par flexion valant entre 634 et 1328 MPa et une ténacité à la rupture valant entre 17 et 39 MPa.m$^{1/2}$.

**16.** Matériau composite renforcé de fibres selon la revendication 1, **caractérisé** en ce qu'il contient, en tant que matériau de matrice, un verre d'aluminosilicate alcalino-terreux contenant du B$_2$O$_3$, ainsi qu'une fraction de 42 % en volume de fibres de carbone présentant une résistance à la traction valant jusqu'à 7000 MPa et un module E d'environ 300 GPa, tant le matériau de matrice que les fibres étant enrobés d'une couche de liant obtenue par hydrolyse thermique et polycondensation d'au moins un ester d'acide silicique, et en ce qu'il présente une résistance à la rupture par flexion valant en moyenne 1200 MPa et une ténacité à la rupture valant en moyenne 19 MPa.m$^{1/2}$.

24

**17.** Procédé de fabrication de matériaux composites renforcés de fibres, constitués d'une part d'un verre, d'une vitro-céramique ou de leurs mélanges et d'autre part de fibres minérales, dans lequel les fibres minérales sont tirées en continu à travers une suspension en lit tourbillonnaire d'une poudre frittable constituée par un verre, une vitro-céramique, de la cordiérite ou des mélanges de ces poudres, et les fibres collées avec la suspension sont enroulées en couches les unes sur les autres en un prépreg, séchées et comprimées à chaud, ledit procédé étant **caractérisé** en ce que l'on utilise une suspension qui contient une solution d'au moins un alcoxyde de métal, présentant déjà des produits d'hydrolyse ainsi que leurs produits de polycondensation, et en ce que, avant la compression à chaud, le prépreg est soumis à un conditionnement pour hydrolyse de l'alcoxyde de métal et les produits d'hydrolyse sont soumis à une polycondensation.

**18.** Procédé selon la revendication 17, **caractérisé** en ce que l'on utilise, en tant que fibres minérales, des fibres choisies dans le groupe constitué par des fibres de SiC, $Si_3N_4$, $Al_2O_3$, $ZrO_2$, $SiO_2$, mullite ou carbone, ainsi que par les combinaisons des fibres mentionnées ci-dessus.

**19.** Procédé selon la revendication 18, **caractérisé** en ce que les fibres minérales contiennent comme constituant supplémentaire, au moins un élément du groupe constitué par Si, Ti, Zr, Al, C, O et N.

**20.** Procédé selon l'une des revendications 17 à 19, **caractérisé** en ce que l'on utilise, en tant qu'alcoxydes de métal, seuls ou en combinaison, des alcoxydes des éléments des groupes principaux IA à IVA et des groupes secondaires IVB et VB, et en particulier des éléments Na, K, Mg, Ca, Ba, Al, Si, Ti, Zr, Hf, Nb et Ta.

**21.** Procédé selon l'une des revendications 17 à 20, **caractérisé** en ce que l'on utilise, en tant qu'alcoxydes de métal, des mélanges d'au moins un ester d'acide silicique et d'un ou plusieurs alcoxydes des éléments indiqués dans la revendication 20.

**22.** Procédé selon l'une des revendications 17 à 20, **caractérisé** en ce que l'on utilise, en tant qu'alcoxyde de métal, au moins un ester d'acide silicique.

**23.** Procédé selon l'une des revendications 17 à 22, **caractérisé** en ce que l'on utilise un acide en solution aqueuse en tant que solvant pour la solution d'au moins un alcoxyde de métal, présentant déjà des produits d'hydrolyse ainsi que leurs produits de polycondensation.

**24.** Procédé selon la revendication 23, **caractérisé** en ce que l'on utilise, en tant qu'acide en solution aqueuse, un mélange d'eau distillée et d'acide acétique concentré en un rapport de 1:1 à 10:1.

**25.** Procédé selon l'une des revendications 23 et 24, **caractérisé** en ce que l'on ajoute au moins un autre solvant à la solution acide d'alcoxyde de métal, pour l'ajustement du degré de dillution.

**26.** Procédé selon la revendication 25, **caractérisé** en ce que cet autre solvant est choisi dans le groupe constitué par le méthanol, l'éthanol, le n-propanol, l'i-propanol, le n-butanol, l'acétone, la méthyl-éthyl-cétone, l'acétate de méthyle, l'acétate d'éthyle et l'acétate de butyle.

**27.** Procédé selon l'une des revendications 17 à 26, **caractérisé** en ce que l'on utilise une poudre d'un verre choisi dans le groupe constitué par les verres de borosilicate, les verres d'aluminosilicate alcalino-terreux, les verres d'aluminosilicate alcalino-terreux contenant du $B_2O_3$, les verres d'aluminosilicate alcalino-terreux contenant du $P_2O_5$, ainsi que les combinaisons des verres mentionnés ci-dessus.

**28.** Procédé selon l'une des revendications 17 à 26, **caractérisé** en ce que l'on utilise une poudre d'au moins un verre de départ de vitro-céramiques.

**29.** Procédé selon la revendication 28, **caractérisé** en ce que l'on utilise une poudre d'au moins un verre de départ pour vitro-céramiques contenant de la cordiérite.

**30.** Procédé selon l'une des revendications 17 à 29, **caractérisé** en ce que la poudre frittable est incorporée dans la solution en une quantité telle que le rapport pondéral de la poudre frittable et de la solution se situe dans l'intervalle allant de 1:5 à 1:1.

**31.** Procédé selon l'une des revendications 17 à 30, **caractérisé** en ce que la compression à chaud s'effectue à des températures de 1000 à 1600°C et sous des pressions de 2 à 20 MPa.

**32.** Procédé selon l'une des revendications 17 à 31, **caractérisé** en ce que la compression à chaud est effectuée en atmosphère de gaz inerte ou sous vide.

**33.** Procédé selon l'une des revendications 28 et 29, **caractérisé** en ce que la céramisation (transformation) du verre de départ est effectuée en même temps que la compression à chaud.

**34.** Procédé selon l'une des revendications 28 et 29, **caractérisé** en ce que la céramisation du verre de départ est effectuée après la compression à chaud.

Fig. 1    Spannungs-Dehnungs-Diagramm von Duran/SiC-Ver = bundkörper (Fasergehalt 40±2 Vol.-%) (SiO₂ Sol-Gel-Lösung)

Spannung in MPa — 700 500 300 100 0

Dehnung in % — 0  0,2  0,4  0,6  0,8  1,0  1,2  1,4

Spannungs-Dehnungs-Diagramm von Duran/SiC (Du= ran Sol-Gel-Lösung)-Verbundkörper (Fasergehalt 40 ± 2 Vol.-%)

Fig. 2

Fig.3  Spannungs-Dehnungs-Diagramm von Supremax / SiC -
Verbundkörper (Fasergehalt 45 ± 2 Vol. - %)

EP 0 308 742 B1

EP 0 308 742 B1

Fig. 4    Spannungs-Dehnungs-Diagramm von Duran/C (T800)-
Verbundkörper (Fasergehalt 50 ± 2 Vol. - %)

(SiO₂-Sol-Gel-Lösung)